(19) Europäisches Patentamt
European Patent Office
Office européen des brevets

(11) **EP 4 601 385 A1**

(12) **EUROPEAN PATENT APPLICATION**
published in accordance with Art. 153(4) EPC

(43) Date of publication:
**13.08.2025 Bulletin 2025/33**

(21) Application number: **23870624.6**

(22) Date of filing: **22.09.2023**

(51) International Patent Classification (IPC):
**H04W 72/232** (2023.01)    **H04L 27/26** (2006.01)

(52) Cooperative Patent Classification (CPC):
**H04L 27/26; H04W 72/0453; H04W 72/231;**
**H04W 72/232**

(86) International application number:
**PCT/CN2023/120654**

(87) International publication number:
**WO 2024/067393 (04.04.2024 Gazette 2024/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.09.2022  CN 202211181510**

(71) Applicant: **Apogee Networks, LLC**
**Dallas, TX 75201 (US)**

(72) Inventors:
• **LIU, Zheng**
  **Shanghai 201206 (CN)**
• **ZHANG, Xiaobo**
  **Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS FOR USE IN WIRELESS COMMUNICATION NODE**

(57)    The present application discloses a method and apparatus for use in a wireless communication node. A node receives a first information block, the first information block being used for determining a first cell set, and the first cell set comprising a plurality of cells; and the node monitors a plurality of PDCCH candidates, wherein the plurality of PDCCH candidates comprise at least one PDCCH candidate belonging to a first search space set; a first index value is equal to an index value of the first search space set, and the first index value is a non-negative integer; a feature DCI format is a DCI format for the first search space set; the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level. The present application reduces the complexity.

Receive a first information block —101

100

Monitor a plurality of PDCCH candidates —102

FIG. 1

EP 4 601 385 A1

**Description**

**Technical Field**

The present application relates to a transmission method and apparatus in a wireless communication system, and in particular to, a multi-carrier transmission method and apparatus in wireless communication.

**Background Art**

In the future, the application scenarios of a wireless communication system will become more and more diversified, and different application scenarios impose different performance requirements for the system. In order to meet the different performance requirements of various application scenarios, it was decided at the 72nd plenary meeting of the 3GPP (3rd Generation Partner Project) RAN (Radio Access Network) to carry out study on the new radio (NR) technology (or 5G). At the 75th plenary meeting of the 3GPP RAN, the WI (Work Item) of the new radio (NR) technology was approved, and the standardization work on NR was initiated.

In the NR technology, multi-carrier technologies (comprising carrier aggregation, dual connectivity, etc.) are an important component. In order to adapt to diversified application scenarios and meet different needs, 3GPP has been evolving the multi-carrier technologies since the Rel-15 version.

**Summary of the Invention**

In a process of multi-carrier communication, such as carrier aggregation (CA), cross carrier scheduling is supported. In networks supported by existing standards, such as 5G NR (New Radio) of R17 and previous versions, for a plurality of scheduled carriers, scheduling is only supported on the corresponding carriers or the corresponding PDCCHs (Physical Downlink Control Channels), while scheduling through the same PDCCH on the same carrier is not supported.

In response to the situation of simultaneously scheduling PDSCHs or PUSCHs on a plurality of carriers by the same PDCCH in the multi-carrier system of NR, the present application discloses a solution. It should be noted that in the description of the present application, PDCCH scheduling in multi-carriers is only used as one typical application scenario or example; and the present application is also applicable to other scenarios facing similar problems (such as other scenarios with higher requirements for control channel capacity, including, but not limited to, capacity enhancement systems, systems using higher frequencies, coverage enhancement systems, unlicensed frequency domain communications, IoT (Internet of Things), URLLC (Ultra Reliable Low Latency Communication) network, and Internet of Vehicles), and may also achieve similar technical effects. In addition, using a unified solution for different scenarios (including, but not limited to, multi-carrier scenarios) can also help to reduce hardware complexity and cost. In the case of no conflict, embodiments and features in the embodiments of a first node device of the present application may be applied to a second node device, and vice versa. In particular, the interpretation of terminologies, nouns, functions, and variables in the present application (if not otherwise specified) may refer to the definitions of the TS36 series, TS38 series, and TS37 series of 3GPP standard protocols.

The present application discloses a method for use in a first node for wireless communication, comprising:

receiving a first information block, the first information block being used for determining a first cell set, and the first cell set comprising a plurality of cells; and
monitoring a plurality of PDCCH candidates,
wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

According to one aspect of the present application, the above method comprises:

receiving M1 information blocks,
wherein the M1 information blocks are used for respectively determining index values of M1 search space sets and the number of PDCCH candidates respectively using the first aggregation level in the M1 search space sets, and M1 is a positive integer greater than 1; any one of the M1 search space sets is a search space set for a cell in the first cell set, and in the M1 search space sets, all search space sets whose index values are equal to the first index value comprise an equal number of PDCCH candidates using the first aggregation level.

According to one aspect of the present application, the above method comprises that the number of PDCCH candidates using the first aggregation level that are comprised in any one search space set whose index value is equal to the first index value and which is for the first cell set is a feature number value, the feature number value is one of M2 number values, and M2 is a positive integer greater than 1; any one of the M2 number values is the number of PDCCH candidates using the first aggregation level and that are comprised in a search space set whose index value is equal to the first index value and which is for at least one cell, and the maximum number value of the M2 number values is used for determining PDCCH candidates using the first aggregation level from the first search space set.

According to one aspect of the present application, the above method comprises that the first information block is used for determining W1 cell sets and W2 cell sets, any one of the W1 cell sets comprises at least one cell, any one of the W2 cell sets comprises at least one cell, W1 is a positive integer greater than 1, and W2 is a positive integer greater than 1; the first cell set comprises all cells comprised in any one of the W1 cell sets, and the first cell set comprises all cells comprised in any one of the W2 cell sets.

According to one aspect of the present application, the above method comprises that a first number value is equal to the maximum value of the number of cells respectively comprised in the W1 cell sets, a second number value is equal to the maximum value of the number of cells respectively comprised in the W2 cell sets, the first number value is a positive integer, and the second number value is a positive integer; the first number value is used for determining a first candidate size, the second number value is used for determining a second candidate size, and a size of the feature DCI format is equal to a larger value between the first candidate size and the second candidate size.

According to one aspect of the present application, the above method comprises:

sending a second information block,
wherein the second information block is used for indicating a capability parameter set of a sender of the second information block, and the capability parameter set of the sender of the second information block comprises at least a first parameter and a second parameter; the first parameter is used for indicating the number of downlink cells supported by the sender of the second information block that are scheduled simultaneously by one PDCCH, and the second parameter is used for indicating the number of uplink cells supported by the sender of the second information block that are scheduled simultaneously by one PDCCH.

According to one aspect of the present application, the above method comprises that the plurality of PDCCH candidates comprise a first PDCCH candidate and a second PDCCH candidate, the first PDCCH candidate is for a first DCI format, the second PDCCH candidate is for a second DCI format, and a size of the first DCI format is equal to a size of the second DCI format; the first DCI format is used for scheduling one cell set; the second DCI format is used for scheduling another cell set; an aggregation level of the first PDCCH candidate is equal to an aggregation level of the second PDCCH candidate, and an index of a control resource set to which the first PDCCH candidate belongs is equal to an index of a control resource set to which the second PDCCH candidate belongs; the first node device can receive a PDCCH carrying the first DCI format on the second PDCCH candidate.

The present application discloses a method for use in a second node for wireless communication, comprising:

sending a first information block, the first information block being used for determining a first cell set, and the first cell set comprising a plurality of cells; and
determining a plurality of PDCCH candidates,
wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

According to one aspect of the present application, the above method comprises:

sending M1 information blocks,
wherein the M1 information blocks are used for respectively determining index values of M1 search space sets and the number of PDCCH candidates respectively using the first aggregation level in the M1 search space sets, and M1 is a positive integer greater than 1; any one of the M1 search space sets is a search space set for a cell in the first cell set, and in the M1 search space sets, all search space sets whose index values are equal to the first index value comprise an equal number of PDCCH candidates using the first aggregation level.

According to one aspect of the present application, the above method comprises that the number of PDCCH candidates using the first aggregation level that are comprised in any one search space set whose index value is equal to the first index value and which is for the first cell set is a feature number value, the feature number value is one of M2 number values, and M2 is a positive integer greater than 1; any one of the M2 number values is the number of PDCCH candidates using the first aggregation level and that are comprised in a search space set whose index value is equal to the first index value and which is for at least one cell, and the maximum number value of the M2 number values is used for determining PDCCH candidates using the first aggregation level from the first search space set.

According to one aspect of the present application, the above method comprises that the first information block is used for determining W1 cell sets and W2 cell sets, any one of the W1 cell sets comprises at least one cell, any one of the W2 cell sets comprises at least one cell, W1 is a positive integer greater than 1, and W2 is a positive integer greater than 1; the first cell set comprises all cells comprised in any one of the W1 cell sets, and the first cell set comprises all cells comprised in any one of the W2 cell sets.

According to one aspect of the present application, the above method comprises that a first number value is equal to the maximum value of the number of cells respectively comprised in the W1 cell sets, a second number value is equal to the maximum value of the number of cells respectively comprised in the W2 cell sets, the first number value is a positive integer, and the second number value is a positive integer; the first number value is used for determining a first candidate size, the second number value is used for determining a second candidate size, and a size of the feature DCI format is equal to a larger value between the first candidate size and the second candidate size.

According to one aspect of the present application, the above method comprises:

receiving a second information block,
wherein the second information block is used for indicating a capability parameter set of a sender of the second information block, and the capability parameter set of the sender of the second information block comprises at least a first parameter and a second parameter; the first parameter is used for indicating the number of downlink cells supported by the sender of the second information block that are scheduled simultaneously by one PDCCH, and the second parameter is used for indicating the number of uplink cells supported by the sender of the second information block that are scheduled simultaneously by one PDCCH.

According to one aspect of the present application, the above method comprises that the plurality of PDCCH candidates comprise a first PDCCH candidate and a second PDCCH candidate, the first PDCCH candidate is for a first DCI format, the second PDCCH candidate is for a second DCI format, and a size of the first DCI format is equal to a size of the second DCI format; the first DCI format is used for scheduling one cell set; the second DCI format is used for scheduling another cell set; an aggregation level of the first PDCCH candidate is equal to an aggregation level of the second PDCCH candidate, and an index of a control resource set to which the first PDCCH candidate belongs is equal to an index of a control resource set to which the second PDCCH candidate belongs; the first node device can receive a PDCCH carrying the first DCI format on the second PDCCH candidate.

The present application discloses a first node device for use in wireless communication, comprising:

a first transceiver, receiving a first information block, the first information block being used for determining a first cell set, and the first cell set comprising a plurality of cells; and
a first receiver, monitoring a plurality of PDCCH candidates,
wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

The present application discloses a second node device for use in wireless communication, comprising:

a second transceiver, sending a first information block, the first information block being used for determining a first cell set, and the first cell set comprising a plurality of cells; and
a first transmitter, determining a plurality of PDCCH candidates,
wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

## Brief Description of the Drawings

Other features, purposes and advantages of the present application will become more apparent from reading the detailed description of the non-limiting embodiments made with reference to the following drawings:

FIG. 1 shows a flowchart of a first information block and a plurality of PDCCH candidates according to one embodiment of the present application;
FIG. 2 shows a schematic diagram of a network architecture according to one embodiment of the present application;
FIG. 3 shows a schematic diagram of a radio protocol architecture for a user plane and a control plane according to one embodiment of the present application;
FIG. 4 shows a schematic diagram of a first node device and a second node device according to one embodiment of the present application;
FIG. 5 shows a flowchart of wireless signal transmission according to one embodiment of the present application;
FIG. 6 shows a schematic diagram of M1 search space sets according to one embodiment of the present application;
FIG. 7 shows a schematic diagram of M2 number values according to one embodiment of the present application;
FIG. 8 shows a schematic diagram of a first cell set according to one embodiment of the present application;
FIG. 9 shows a schematic diagram of a first number value and a second number value according to one embodiment of the present application;
FIG. 10 shows a schematic diagram of a first parameter and a second parameter according to one embodiment of the present application;
FIG. 11 shows a schematic diagram of a relationship between a first PDCCH candidate and a second PDCCH candidate according to one embodiment of the present application;
FIG. 12 shows a structural block diagram of a processing apparatus in a first node device according to one embodiment of the present application; and
FIG. 13 shows a structural block diagram of a processing apparatus in a second node device according to one embodiment of the present application.

## Detailed Description of Embodiments

The technical solution of the present application will be further described in detail below in conjunction with the drawings. It should be noted that, in the case of no conflict, embodiments and features in the embodiments in the present application may be arbitrarily combined with each other.

## Embodiment 1

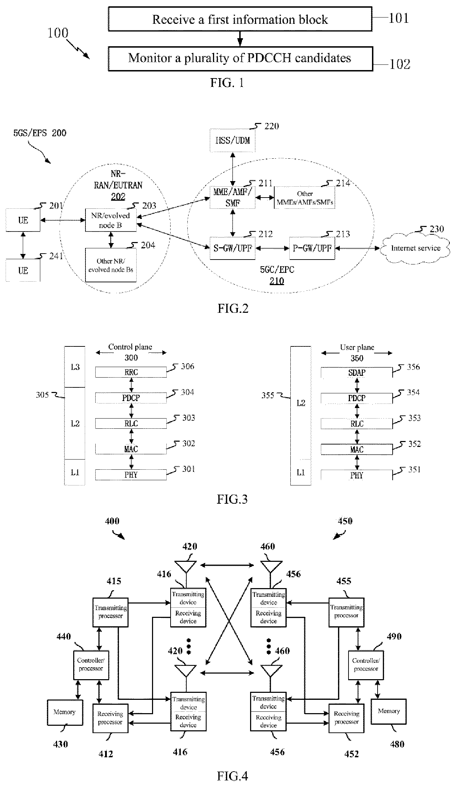

Embodiment 1 illustrates a flowchart 100 of a first information block and a plurality of PDCCH candidates according to one embodiment of the present application, as shown in FIG. 1. In FIG. 1, each box represents one step, and it should be particularly emphasized that the order of the boxes in the figure does not limit the chronological relationship of the steps represented.

In Embodiment 1, a first node device in the present application receives a first information block in step 101, the first information block is used for determining a first cell set, and the first cell set comprises a plurality of cells; the first node device in the present application monitors a plurality of PDCCH candidates in step 102, wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

As one embodiment, by limiting that the index value is equal to the first index value and all search space sets for the first cell set comprise an equal number of PDCCH candidates using the first aggregation level, the receiving of DCI of the plurality of cells scheduled simultaneously is guaranteed.

As one embodiment, by limiting that the index value is equal to the first index value and all search space sets for the first cell set comprise an equal number of PDCCH candidates using the first aggregation level, the complexity of monitoring PDCCH candidates of the plurality of cells scheduled simultaneously is reduced.

As one embodiment, the first information block is transmitted via an air interface or a wireless interface.

As one embodiment, the first information block comprises all or part of a high-layer signaling or a physical layer signaling.

As one embodiment, the first information block comprises all or part of one RRC (Radio Resource Control) layer signaling, or the first information block comprises all or part of one MAC (Medium Access Control) layer signaling.

As one embodiment, the first information block comprises all or part of one system information block (SIB).

As one embodiment, the first information block is user equipment-specific (UE-specific).

As one embodiment, the first information block is configured per carrier, or the first information block is configured per BWP (bandwidth part), or the first information block is configured per search space.

As one embodiment, the first information block is configured per band or per frequency range (FR).

As one embodiment, the first information block comprises all or part of fields in an IE (Information Element) "CellGroupConfig".

As one embodiment, the first information block comprises a field "secondaryCellGroup", or the first information block comprises a field "masterCell Group".

As one embodiment, the first information block is configured per cell group, or the first information block is configured per PUCCH (Physical Uplink Control Channel) group.

As one embodiment, the first information block comprises all or part of fields in an IE "ServingCellConfig", or the first information block comprises all or part of fields in an IE "BWP-Downlink", or the first information block comprises all or part of fields in an IE "crossCarrierSchedulingConfig", or the first information block comprises all or part of fields in an IE "PDCCH-ServingCellConfig".

As one embodiment, the first information block comprises all or part of fields in an IE "pdcch-ConfigCommon".

As one embodiment, the first information block comprises all or part of fields in an IE "BWP-DownlinkCommon".

As one embodiment, the first information block comprises all or part of fields in an IE "BWP-DownlinkDedicated".

As one embodiment, the first information block comprises all or part of fields in an IE "pdcch-Config".

As one embodiment, the first information block comprises all or part of fields in an IE "SearchSpace".

As one embodiment, the first information block comprises all or part of fields in an IE "SearchSpaceExt-v1800", or the first information block comprises all or part of fields in an IE "SearchSpaceExt2-r18".

As one embodiment, the first information block comprises all or part of fields in a DCI (Downlink Control Information) format.

As one embodiment, the technical feature "the first information block being used for determining a first cell set" comprises the following meaning: the first information block is used by the first node device in the present application for determining the first cell set.

As one embodiment, the technical feature "the first information block being used for determining a first cell set" comprises the following meaning: all or part comprised in the first information block are/is used for explicitly or implicitly indicating the first cell set.

As one embodiment, the technical feature "the first information block being used for determining a first cell set" comprises the following meaning: all or part comprised in the first information block are/is used for indirectly or directly indicating the first cell set.

As one embodiment, the technical feature "the first information block being used for determining a first cell set" comprises the following meanings: the first information block indicates one bit map, and the bit map indicated by the first information block is used for explicitly or implicitly indicating the first cell set.

As one embodiment, the technical feature "the first information block being used for determining a first cell set" comprises the following meanings: the first information block indicates one bit map, each bit in the bit map indicated by the first information block corresponds to one cell, and cells corresponding to bits whose bit values are equal to "1" in the bit map indicated by the first information block constitute the first cell set.

As one embodiment, the technical feature "the first information block being used for determining a first cell set" comprises the following meanings: the first information block indicates one bit map, each bit in the bit map indicated by the first information block corresponds to one cell, and cells corresponding to the bits whose bit values are equal to "0" in the bit map indicated by the first information block constitute the first cell set.

As one embodiment, the technical feature "the first information block being used for determining a first cell set" comprises the following meanings: the first information block obtains the first cell set by adding cells in the first cell set, or the first information block obtains the first cell set by releasing cells from the first cell set.

As one embodiment, the technical feature "the first information block being used for determining a first cell set" comprises the following meanings: the first information block comprises an add list sub-information block and a release list sub-information block, the add list sub-information block is used for adding cells in the first cell set, and the release list sub-information block is used for releasing cells from the first cell set.

As one embodiment, the technical feature "the first information block being used for determining a first cell set" comprises the following meanings: the first information block is used for determining W3 cell sets, any one of the W3 cell sets comprises at least one cell, and W3 is a positive integer greater than 1; the first cell set comprises any one cell in the W3 cell sets.

As one embodiment, the expression "the first information block being used for determining a first cell set" in the claim comprises the following meaning: all or part comprised in the first information block are/is used for explicitly or implicitly indicating at least one cell comprised in the first cell set.

As one embodiment, the expression "the first information block being used for determining a first cell set" in the claim comprises the following meaning: all or part comprised in the first information block are/is used for explicitly or implicitly indicating an index of at least one secondary cell (SCell) comprised in the first cell set.

As one embodiment, the expression "the first information block being used for determining a first cell set" in the claim comprises the following meaning: all or part comprised in the first information block are/is used for explicitly or implicitly indicating configuration information of cross carrier scheduling (CCS) of at least one cell comprised in the first cell set.

As one embodiment, the expression "the first information block being used for determining a first cell set" in the claim comprises the following meanings: all or part comprised in the first information block are/is used for explicitly or implicitly indicating a scheduling cell index (or ID) of at least one cell, and the first cell set comprises cells with equal scheduling cell indexes.

As one embodiment, the expression "the first information block being used for determining a first cell set" in the claim comprises the following meanings: the first information block is used for determining W1 cell sets and W2 cell sets, any one of the W1 cell sets comprises at least one cell, any one of the W2 cell sets comprises at least one cell, W1 is a positive integer greater than 1, and W2 is a positive integer greater than 1; the first cell set comprises all cells comprised in any one of the W1 cell sets, and the first cell set comprises all cells comprised in any one of the W2 cell sets.

As one embodiment, the expression "the first information block being used for determining a first cell set" in the claim comprises the following meaning: the first information block is used for determining a cell group that comprises any one cell in the first cell sets.

As one embodiment, the expression "the first information block being used for determining a first cell set" in the claim comprises the following meaning: the first information block is used for determining a PUCCH group that comprises any one cell in the first cell sets.

As one embodiment, the two expressions "cell" and "serving cell" are equivalent or may be used interchangeably.

As one embodiment, any one cell comprised in the first cell set is a serving cell.

As one embodiment, any one cell comprised in the first cell set is a component carrier (CC) during carrier aggregation (CA).

As one embodiment, any one cell comprised in the first cell set is one carrier.

As one embodiment, any two cells comprised in the first cell set belong to the same band.

As one embodiment, the first cell set comprises two cells respectively belonging to different bands.

As one embodiment, the first cell set only comprises intra-band cells.

As one embodiment, the first cell set comprises inter-band cells.

As one embodiment, any one cell comprised in the first cell set belongs to a master cell group (MCG).

As one embodiment, any one cell comprised in the first cell set belongs to a secondary cell group (SCG).

As one embodiment, any two cells comprised in the first cell set belong to the same cell group.

As one embodiment, any two cells comprised in the first cell set belong to the same PUCCH group.

As one embodiment, the first cell set comprises both cells in the master cell group and cells in the secondary cell group.

As one embodiment, the first cell set comprises a special cell (SpCell).

As one embodiment, the first cell set does not comprise a special cell (SpCell).

As one embodiment, scheduling cells of any two cells comprised in the first cell set are the same.

As one embodiment, the first cell set comprises two cells whose scheduling cells are different.

As one embodiment, any one cell comprised in the first cell set is an activated cell.

As one embodiment, the first cell set comprises one cell that is a deactivated cell.

As one embodiment, the number of cells comprised in the first cell set is not greater than 8.

As one embodiment, the number of cells comprised in the first cell set is not greater than 4.

As one embodiment, the number of cells comprised in the first cell set is not less than 3.

As one embodiment, the number of cells comprised in the first cell set is not greater than the maximum number of cells scheduled simultaneously and indicated by a capability report of the first node device.

As one embodiment, a subcarrier spacings of active BWPs respectively belonging to any two cells comprised in the first cell set are equal.

As one embodiment, the first cell set comprises cells that can be scheduled simultaneously by one PDCCH or one DCI format.

As one embodiment, any two cells comprised in the first cell set can be configured to be scheduled simultaneously by one PDCCH or one DCI format.

As one embodiment, any cell set that can be configured to be scheduled simultaneously by one PDCCH or one DCI format belongs to the first cell set.

As one embodiment, part or all comprised in the first information block is/are used for explicitly or implicitly determining the plurality of PDCCH candidates.

As one embodiment, a signaling other than the first information block is used for determining the plurality of PDCCH candidates.

As one embodiment, a PDCCH configuration signaling is used for determining the plurality of PDCCH candidates.

As one embodiment, the plurality of PDCCH candidates all belong to the same given time window in a time domain.

As one embodiment, the plurality of PDCCH candidates all belong to the same slot or the same span in the time domain.

As one embodiment, the plurality of PDCCH candidates all belong to the same time window composed of a plurality of consecutive slots in the time domain.

As one embodiment, the plurality of PDCCH candidates comprise all or part of PDCCH candidates monitored by the first node device within one time window.

As one embodiment, the plurality of PDCCH candidates comprise all or part of the PDCCH candidates configured within one time window.

As one embodiment, the number of CCEs occupied by any one of the plurality of PDCCH candidates is equal to one of 1, 2, 4, 8, and 16.

As one embodiment, any one of the plurality of PDCCH candidates is a monitored physical downlink control channel candidate (Monitored PDCCH Candidate).

As one embodiment, any one of the plurality of PDCCH candidates is a physical downlink control channel (PDCCH) candidate for one or more DCI formats.

As one embodiment, any one of the plurality of PDCCH candidates is a PDCCH candidate for one or more DCI payload sizes.

As one embodiment, the plurality of PDCCH candidates all belong to the first search space set.

As one embodiment, in the plurality of PDCCH candidates, there are two PDCCH candidates that belong to two different search space sets respectively.

As one embodiment, only part of the plurality of PDCCH candidates belong to the first search space set.

As one embodiment, the plurality of PDCCH candidates comprise two PDCCH candidates for the same DCI format size.

As one embodiment, indexes of any two of the plurality of PDCCH candidates are not equal.

As one embodiment, the plurality of PDCCH candidates comprise two PDCCH candidates whose indexes are equal.

As one embodiment, in the plurality of PDCCH candidates, there are two PDCCH candidates that occupy the same CCE set.

As one embodiment, in the plurality of PDCCH candidates, there are no two PDCCH candidates that occupy the same CCE set.

As one embodiment, the number of CCEs occupied by any one of the plurality of PDCCH candidates is equal to an aggregation level (AL) of the PDCCH candidate.

As one embodiment, any one CCE occupied by any one of the plurality of PDCCH candidates comprises 6 REGs (resource element groups).

As one embodiment, any one CCE occupied by any one of the plurality of PDCCH candidates comprises REs occupied by a PDCCH DMRS (demodulation reference signal).

As one embodiment, the two expressions "monitoring a plurality of PDCCH candidates" and "decoding each of the plurality of PDCCH candidates" are equivalent or may be used interchangeably.

As one embodiment, the two expressions "monitoring a plurality of PDCCH candidates" and "blindly decoding each of the plurality of PDCCH candidates" are equivalent or may be used interchangeably.

As one embodiment, the two expressions "monitoring a plurality of PDCCH candidates" and "performing decoding and CRCs on each of the plurality of PDCCH candidates" are equivalent or may be used interchangeably.

As one embodiment, the two expressions "monitoring a plurality of PDCCH candidates" and "performing decoding and CRCs scrambled by a RNTI (Radio Network Temporary Identity) on each of the plurality of PDCCH candidates" are equivalent or may be used interchangeably.

As one embodiment, the two expressions "monitoring a plurality of PDCCH candidates" and "decoding each of the plurality of PDCCH candidates for the monitored DCI (Downlink Control Information) format(s)" are equivalent or may be used interchangeably.

As one embodiment, the two expressions "monitoring a plurality of PDCCH candidates" and "decoding each of the plurality of PDCCH candidates for one or more monitored DCI formats" are equivalent or may be used interchangeably.

As one embodiment, the two expressions "monitoring a plurality of PDCCH candidates" and "decoding each of the plurality of PDCCH candidates for one or more monitored DCI payload sizes" are equivalent or may be used interchangeably.

As one embodiment, only part of the PDCCH candidates in the first search space set are monitored.

As one embodiment, all PDCCH candidates in the first search space set are monitored.

As one embodiment, the first search space set is a USS.

As one embodiment, the first search space set is a USS configured with a DCI format that can simultaneously schedule a plurality of cells comprising PDSCHs or a plurality of cells comprising PUSCHs.

As one embodiment, the first search space set is a USS specifically for one DCI or one PDCCH to simultaneously schedule a plurality of cells.

As one embodiment, the first search space set is a USS that simultaneously supports one DCI or one PDCCH to schedule only one cell and one DCI or one PDCCH to simultaneously schedule a plurality of cells.

As one embodiment, the first search space set is one set of PDCCH candidates.

As one embodiment, the first search space set is a search space set configured by one search space configuration.

As one embodiment, the first search space set is one search space in a PDCCH configuration.

As one embodiment, an index value of the first search space set is equal to 0.

As one embodiment, the index value of the first search space set is greater than 0.

As one embodiment, the first search space set is configured for cells other than the first cell set.

As one embodiment, the first search space set is configured for scheduling cells of the first cell set.

As one embodiment, a configuration of any one search space set for any one cell in the first cell set only comprises a field for configuring the number of PDCCH candidates using the supported aggregation level.

As one embodiment, all optional fields in the configuration of any one search space set for any one cell in the first cell set are absent.

As one embodiment, a field for configuring a DCI format not comprised in the configuration of any one search space set for any one cell in the first cell set is absent.

As one embodiment, the first search space set is configured for a feature cell, and the configuration of any one search space set for any one cell other than the feature cell in the first cell set only comprises a field for configuring the number of PDCCH candidates using the supported aggregation level.

As one embodiment, all optional fields in a configuration of any one search space set for any cell other than the feature cell in the first cell set are absent.

As one embodiment, a field for configuring the DCI format not comprised in the configuration of any one search space set for any one cell other than the feature cell in the first cell set is absent.

As one embodiment, a configuration of any one search space set for any one secondary cell scheduled by cross carriers in the first cell set only comprises a field for configuring the number of PDCCH candidates using the supported aggregation level.

As one embodiment, all optional fields in the configuration of any one search space set for any one secondary cell scheduled by cross carriers in the first cell set are absent.

As one embodiment, a field for configuring the DCI format not comprised in the configuration of any one search space set for any one secondary cell scheduled by cross carriers in the first cell set is absent.

As one embodiment, the technical feature "the plurality of PDCCH candidates comprise at least one PDCCH candidate belonging to a first search space set" comprises the following meaning: any one of the plurality of PDCCH candidates is a PDCCH candidate comprised in the first search space set.

As one embodiment, the technical feature "the plurality of PDCCH candidates comprise at least one PDCCH candidate belonging to a first search space set" comprises the following meaning: part of PDCCH candidates comprised in the plurality of PDCCH candidates are PDCCH candidates comprised in the first search space set.

As one embodiment, the technical feature "the plurality of PDCCH candidates comprise at least one PDCCH candidate belonging to a first search space set" comprises the following meaning: at least one PDCCH candidate comprised in the plurality of PDCCH candidates is determined by a configuration signaling of the first search space set.

As one embodiment, the technical feature "the plurality of PDCCH candidates comprise at least one PDCCH candidate belonging to a first search space set" comprises the following meaning: at least one PDCCH candidate comprised in the plurality of PDCCH candidates is a PDCCH candidate in the form of the first search space set.

As one embodiment, the technical feature "the plurality of PDCCH candidates comprise at least one PDCCH candidate belonging to a first search space set" comprises the following meaning: at least one PDCCH candidate comprised in the plurality of PDCCH candidates is a PDCCH candidate comprised in the first search space set within one time window.

As one embodiment, the technical feature "the plurality of PDCCH candidates comprise at least one PDCCH candidate belonging to a first search space set" comprises the following meaning: at least one PDCCH candidate comprised in the plurality of PDCCH candidates is a PDCCH candidate comprised in the first search space set within one slot or within one span.

As one embodiment, the technical feature "the plurality of PDCCH candidates comprise at least one PDCCH candidate belonging to a first search space set" comprises the following meaning: at least one PDCCH candidate comprised in the plurality of PDCCH candidates is a PDCCH candidate comprised in the first search space set within one time window composed of a plurality of consecutive slots in the time domain.

As one embodiment, the technical feature "the plurality of PDCCH candidates comprise at least one PDCCH candidate belonging to a first search space set" comprises the following meaning: at least one PDCCH candidate comprised in the plurality of PDCCH candidates is associated with the first search space set.

As one embodiment, the technical feature "the plurality of PDCCH candidates comprise at least one PDCCH candidate belonging to a first search space set" comprises the following meaning: at least one PDCCH candidate comprised in the plurality of PDCCH candidates is associated with an index or identifier of the first search space set.

As one embodiment, the technical feature "the plurality of PDCCH candidates comprise at least one PDCCH candidate belonging to a first search space set" comprises the following meaning: configuration parameters used for determining at least one PDCCH candidate comprised in the plurality of PDCCH candidates and the index or identifier of the first search space set are determined by the same IE.

As one embodiment, an index value of the first search space set and an identification value (ID) of the first search space set are equivalent or may be used interchangeably.

As one embodiment, the index value of the first search space set is configured for a configuration signaling of the first search space set.

As one embodiment, the index value of the first search space set is an index of the first search space set in a search space list to which it belongs.

As an embodiment, the index value of the first search space set is the ordering of the first search space set in the search space list to which it belongs.

As one embodiment, the feature DCI format is one of 0_K or 1_K, and K is a positive integer greater than 2. As one auxiliary embodiment of the above embodiment, K is equal to 3. As one auxiliary embodiment of the above embodiment, K is equal to 4. As one auxiliary embodiment of the above embodiment, K is equal to 5.

As one embodiment, the feature DCI format is one of 0_Φ or 1_Φ, and Φ is one letter.

As one embodiment, the feature DCI format is a DCI format newly introduced in the Release 18 version.

As one embodiment, the feature DCI format is a DCI format that may schedule a plurality of cells.

As one embodiment, the feature DCI format is a DCI format that may schedule a plurality of PDSCHs respectively belonging to a plurality of cells, or the feature DCI format is a DCI format that may schedule a plurality of PUSCHs respectively belonging to a plurality of cells.

As one embodiment, a DCI format combination to which the feature DCI format belongs is predefined or configured.

As one embodiment, the DCI format combination to which the feature DCI format belongs is configured through a PDCCH configuration signaling.

As one embodiment, the feature DCI format is a DCI format for scheduling an uplink channel or signal.

As one embodiment, the feature DCI format is a DCI format for scheduling a downlink channel or signal.

As one embodiment, the feature DCI format is one of DCI formats supported by a UE-specific search space set (USS set).

As one embodiment, the feature DCI format is configured per search space set.

As one embodiment, the feature DCI format is used for indicating the first cell set.

As one embodiment, the feature DCI format is used for indicating cells scheduled simultaneously by the feature DCI format from the first cell set.

As one embodiment, the number of cells actually scheduled simultaneously by the feature DCI format is greater than 1.

As one embodiment, the number of cells actually scheduled simultaneously by the feature DCI format is equal to 1.

As one embodiment, the technical feature "a feature DCI format is a DCI format for the first search space set" comprises the following meaning: a DCI format combination to which the feature DCI format belongs is configured by a configuration signaling of the first search space.

As one embodiment, the technical feature "a feature DCI format is a DCI format for the first search space set" comprises the following meaning: the feature DCI format is configured by the configuration signaling for the first search space.

As one embodiment, the technical feature "a feature DCI format is a DCI format for the first search space set" comprises the following meaning: two fields in the same IE are used for configuring the feature DCI format and IDs of the first search space set respectively.

As one embodiment, the technical feature "a feature DCI format is a DCI format for the first search space set" comprises the following meaning: the feature DCI format is used for monitoring at least one PDCCH candidate in the first search space set.

As one embodiment, the technical feature "a feature DCI format is a DCI format for the first search space set" comprises the following meaning: the feature DCI format is a DCI format assumed to be carried by at least one PDCCH candidate in the first search space set.

As one embodiment, the technical feature "a feature DCI format is a DCI format for the first search space set" comprises the following meaning: the feature DCI format is associated with the first search space set.

As one embodiment, the technical feature "a feature DCI format is a DCI format for the first search space set" comprises the following meaning: the feature DCI format is a DCI format monitored in the first search space set.

As one embodiment, a DCI format for the first search space set only comprises the feature DCI format.

As one embodiment, the DCI format for the first search space set also comprises a DCI format other than the feature DCI format.

As one embodiment, the DCI format for the first search space set only comprises the feature DCI format and a DCI format with the same size as the feature DCI format.

As one embodiment, the DCI format for the first search space set also comprises a DCI format with a size not equal to that of the feature DCI format.

As one embodiment, the feature DCI format is a DCI format used for scheduling a PDSCH, and the DCI format for the first search space set only comprises the feature DCI format and a DCI format that is used for scheduling a PUSCH and has the same size as the feature DCI format.

As one embodiment, the feature DCI format is a DCI format used for scheduling a PUSCH, and the DCI format for the first search space set only comprises the feature DCI format and a DCI format that is used for scheduling a PDSCH and has the same size as the feature DCI format.

As one embodiment, the DCI format for the first search space set only comprises DCI formats 0_K and 1_K, K is a positive integer greater than 2, and the feature DCI format is one of DCI formats 0_K or 1_K. As one auxiliary embodiment of the above embodiment, K is equal to 3. As one auxiliary embodiment of the above embodiment, K is equal to 4. As one auxiliary embodiment of the above embodiment, K is equal to 5.

As one embodiment, a DCI format for the first search space set comprises DCI formats 0_0, 0_K, 1_0 and 1_K, or the DCI format for the first search space set comprises DCI formats 0_1, 0_K, 1_1 and 1_K, or the DCI format for the first search space set comprises DCI formats 0_2, 0_K, 1_2 and 1_K, or the DCI format for the first search space set comprises DCI formats 0_1, 0_2, 0_K, 1_1, 1_2 and 1_K, or the DCI format for the first search space set comprises DCI formats 0_0, 0_1, 0_2, 0_K, 1_0, 1_1, 1_2 and 1_K, wherein K is a positive integer greater than 2, and the feature DCI format is one of DCI formats 0_K or 1_K. As one auxiliary embodiment of the above embodiment, K is equal to 3. As one auxiliary embodiment of the above embodiment, K is equal to 4. As one auxiliary embodiment of the above embodiment, K is equal to 5.

As one embodiment, any one cell scheduled by the feature DCI format is one cell scheduled by a PDCCH generated by the feature DCI format.

As one embodiment, any one cell scheduled by the feature DCI format is one cell scheduled by a PDCCH carrying the feature DCI format.

As one embodiment, any one cell scheduled by the feature DCI format is one cell to which at least one channel or signal scheduled by the feature DCI format belongs.

As one embodiment, any one cell scheduled by the feature DCI format is one cell configured to be scheduled by the feature DCI format.

As one embodiment, any one cell scheduled by the feature DCI format is one cell for which a downlink allocation or an uplink grant is comprised in the feature DCI format.

As one embodiment, a size of the feature DCI format is related to the number of cells comprised in the first cell set.

As one embodiment, the number of fields of the same type comprised in the feature DCI format is related to the number of cells comprised in the first cell set.

As one embodiment, the number of fields of the same type comprised in the feature DCI format is linearly related to the number of cells comprised in the first cell set.

As one embodiment, the number of fields of the same type comprised in the feature DCI format is equal to the number of cells comprised in the first cell set.

As one embodiment, the number of bits comprised in one field comprised in the feature DCI format is related to the number of cells comprised in the first cell set.

As one embodiment, the number of bits comprised in one field comprised in the feature DCI format is linearly related to the number of cells comprised in the first cell set.

As one embodiment, a size of one field comprised in the feature DCI format is related to the number of cells comprised in the first cell set.

As one embodiment, the size of one field comprised in the feature DCI format is linearly related to the number of cells comprised in the first cell set.

As one embodiment, the technical feature "the upper limit of the number of cells for which the feature DCI format is used for scheduling is greater than 1" comprises the following meaning: the upper limit of the number of cells comprised in the first cell set for which the feature DCI format is used for scheduling simultaneously is greater than 1.

As one embodiment, the technical feature "the upper limit of the number of cells for which the feature DCI format is used for scheduling is greater than 1" comprises the following meaning: the upper limit of the number of cells for which the feature DCI format is used for scheduling simultaneously is greater than 1.

As one embodiment, the technical feature "the upper limit of the number of cells for which the feature DCI format is used for scheduling is greater than 1" comprises the following meaning: the feature DCI format may be used for a plurality of cells scheduled simultaneously.

As one embodiment, the technical feature "the upper limit of the number of cells for which the feature DCI format is used for scheduling is greater than 1" comprises the following meaning: the feature DCI format may be used for one or more cells scheduled simultaneously.

As one embodiment, the technical feature "the upper limit of the number of cells for which the feature DCI format is used for scheduling is greater than 1" comprises the following meaning: the feature DCI format is a DCI format that supports simultaneous scheduling of a plurality of cells.

As one embodiment, the technical feature "the upper limit of the number of cells for which the feature DCI format is used for scheduling is greater than 1" comprises the following meaning: the feature DCI format is a DCI format that supports simultaneous scheduling of a plurality of PDSCHs or a plurality of PUSCHs belonging to a plurality of cells respectively.

As one embodiment, the technical feature "the upper limit of the number of cells for which the feature DCI format is used for scheduling is greater than 1" comprises the following meaning: the upper limit of the number of cells for which the feature DCI format is used for scheduling simultaneously is greater than 1.

As one embodiment, the technical feature "the upper limit of the number of cells for which the feature DCI format is used for scheduling is greater than 1" comprises the following meaning: the maximum value of the number of cells for which the feature DCI format is used for scheduling simultaneously is greater than 1.

As one embodiment, the technical feature "the upper limit of the number of cells for which the feature DCI format is used for scheduling is greater than 1" comprises the following meaning: the feature DCI format is one of DCI formats 0_K or 1_K, wherein K is a positive integer greater than 2. As one auxiliary embodiment of the above embodiment, K is equal to 3. As one auxiliary embodiment of the above embodiment, K is equal to 4. As one auxiliary embodiment of the above embodiment, K is equal to 5.

As one embodiment, the technical feature "the upper limit of the number of cells for which the feature DCI format is used for scheduling is greater than 1" comprises the following meaning: the maximum value of the number of cells for which a PDCCH carrying the feature DCI format is used for scheduling simultaneously is greater than 1.

As one embodiment, the technical feature "the upper limit of the number of cells for which the feature DCI format is used for scheduling is greater than 1" comprises the following meaning: the number of cells scheduled by the feature DCI format configured by a higher layer signaling is greater than 1.

As one embodiment, the technical feature "the upper limit of the number of cells for which the feature DCI format is used for scheduling is greater than 1" comprises the following meaning: the number of cells actually scheduled simultaneously by the feature DCI format is equal to 1 or greater than 1.

As one embodiment, the technical feature "the upper limit of the number of cells for which the feature DCI format is used for scheduling is greater than 1" comprises the following meanings: the number of cells scheduled by the feature DCI format configured by the higher layer signaling is greater than 1, and the feature DCI format is used for explicitly or implicitly indicating the number of cells actually scheduled simultaneously by the feature DCI format.

As one embodiment, the first aggregation level is equal to one of 1, 2, 4, 8, and 16.

As one embodiment, the first aggregation level is one aggregation level (AL) supported by the first search space set.

As one embodiment, the first aggregation level is equal to an aggregation level supported by at least one search space set in at least one cell in the first cell set.

As one embodiment, the aggregation level used by one PDCCH candidate is the number of control channel elements (CCEs) occupied by the PDCCH candidate.

As one embodiment, the aggregation level used by one PDCCH candidate is the number of control channel element (CCEs) to which the PDCCH candidate is mapped.

As one embodiment, the number of CCEs occupied by any one PDCCH candidate using the first aggregation level is equal to the first aggregation level.

As one embodiment, any one PDCCH candidate using the first aggregation level is a PDCCH candidate for which the number of occupied CCEs is equal to the first aggregation level.

As one embodiment, the PDCCH candidate using the first aggregation level is a PDCCH candidate corresponding to the first aggregation level.

As one embodiment, all or part comprised in the first information block are/is used for explicitly or implicitly indicating the first aggregation level.

As one embodiment, all or part comprised in information blocks other than the first information block are/is used for explicitly or implicitly indicating the first aggregation level.

As one embodiment, all or part comprised in a configuration signaling of the first search space set are/is used for explicitly or implicitly indicating the first aggregation level.

As one embodiment, the first aggregation level is equal to one aggregation level configured for at least one cell in the first cell set.

As one embodiment, the first aggregation level is configured per search space set.

As one embodiment, the first aggregation level is configured per cell set, wherein the cell set comprises cells that may be scheduled simultaneously by one DCI or one PDCCH.

As one embodiment, the first aggregation level is configured per cell set, wherein the cell set is the first cell set or one subset comprised in the first cell set.

As one embodiment, at least one PDCCH candidate comprised in the first search space set uses the first aggregation level.

As one embodiment, any one PDCCH candidate comprised in the first search space set uses an aggregation level other than the first aggregation level.

As one embodiment, an index value is equal to the first index value and any one search space set for any one cell in the first cell set comprises at least one PDCCH candidate using the first aggregation level.

As one embodiment, the index value is equal to the first index value and the search space set for only part of one cell in the first cell set comprises at least one PDCCH candidate using the first aggregation level.

As one embodiment, in the first cell set, there is at least one cell in which at least one search space set whose index value is equal to the first index value does not comprise any PDCCH candidate using the first aggregation level.

As one embodiment, the index value of one search space set and an ID of the search space set are equivalent or may be used interchangeably.

As one embodiment, one search space set for the first cell set is a search space set for one cell in the first cell set.

As one embodiment, one search space set for the first cell set is a search space set configured for one cell in the first cell set.

As one embodiment, one search space set for the first cell set is a search space set configured for PDCCH candidates used for scheduling at least one cell in the first cell set.

As one embodiment, one search space set for the first cell set is a search space set used for one cell in the first cell set.

As one embodiment, one search space set for the first cell set is a search space set configured by a PDCCH configuration (PDCCH-Config) used for one cell in the first cell set.

As one embodiment, one search space set for the first cell set is a search space set used for determining the number of PDCCH candidates for scheduling one cell in the first cell set.

As one embodiment, one search space set for the first cell set is a search space set configured by a "Search-Space" IE for one cell in the first cell set.

As one embodiment, for each cell in the first cell set, there is one search space set whose index value is equal to the first index value.

As one embodiment, for one cell in the first cell set, there is no search space set whose index value is equal to the first index value.

As one embodiment, "the index value is equal to the first index value and all search space sets for the first cell set" means: the index value is equal to the first index value and all search space sets for cells comprised in the first cell set.

As one embodiment, the technical feature "the index value is equal to the first index value and all search space sets for the first cell set comprise an equal number of PDCCH candidates using the first aggregation level" comprises the following meaning: the first node device expects that an index value is equal to the first index value and all search space sets for the first cell set comprise an equal number of PDCCH candidates using the first aggregation level.

As one embodiment, the technical feature "the index value is equal to the first index value and all search space sets for the first cell set comprise an equal number of PDCCH candidates using the first aggregation level" comprises the following meaning: the first node device does not expect that the index value is equal to the first index value and all search space sets for the first cell set comprise an unequal number of PDCCH candidates using the first aggregation level.

As one embodiment, the technical feature "the index value is equal to the first index value and all search space sets for the first cell set comprise an equal number of PDCCH candidates using the first aggregation level" comprises the following meanings: the first cell set comprises Q1 cells, Q1 is a positive integer greater than 1, Q1 search space sets are respectively for the Q1 cells, and an index value of any one of the Q1 search space sets is equal to the first index value; the Q1 search space sets all comprise an equal number of PDCCH candidates using the first aggregation level.

As one embodiment, the technical feature "the index value is equal to the first index value and all search space sets for the first cell set comprise an equal number of PDCCH candidates using the first aggregation level" comprises the following meanings: the first cell set comprises Q1 cells that are configured with a search space set whose index value is equal to the first index value, and Q1 is a positive integer greater than 1; any two of the Q1 cells are respectively configured with a search space set whose index value is equal to the first index value and which comprises an equal number of PDCCH candidates using the first aggregation level.

As one embodiment, the technical feature "the index value is equal to the first index value and all search space sets for the first cell set comprise an equal number of PDCCH candidates using the first aggregation level" comprises the following meanings: Q1 search space set lists are configured respectively for Q1 cells comprised in the first cell set, any one of the Q1 search space set lists comprises at least one search space set, and Q1 is a positive integer greater than 1; the Q1 search space set lists comprise a total of Q2 search space sets whose index values are equal to the first index value, and Q2 is a positive integer greater than 1; the Q2 search space sets are all configured with an equal number of PDCCH candidates using the first aggregation level.

As one embodiment, the technical feature "the index value is equal to the first index value and all search space sets for the first cell set comprise an equal number of PDCCH candidates using the first aggregation level" comprises the following meanings: the index value is equal to the first index value and all search space sets for the first cell set are configured with an equal number of PDCCH candidates using the first aggregation level.

As one embodiment, the technical feature "the index value is equal to the first index value and all search space sets for the first cell set comprise an equal number of PDCCH candidates using the first aggregation level" comprises the following meaning: all search space sets which are for at least one cell in the first cell set and indexed by the first index value are configured with an equal number of PDCCH candidates using the first aggregation level.

As one embodiment, any one search space set for any one cell in the first cell set is independently configured.

As one embodiment, the number of PDCCH candidates using the first aggregation level that are comprised in any one search space set for any one cell in the first cell set is independently configured.

As one embodiment, the search space set and the search space are equivalent or may be used interchangeably.

As one embodiment, the search space set and the search space are equivalent or may be used interchangeably in the search space protocol.

## Embodiment 2

Embodiment 2 illustrates a schematic diagram of one network architecture according to the present application, as shown in FIG. 2. FIG. 2 illustrates a diagram of a network architecture 200 of 5G NR, LTE (Long-Term Evolution) and LTE-A (Long-Term Evolution Advanced) systems. The 5G NR or LTE network architecture 200 may be referred to as 5GS (5G System)/EPS (Evolved Packet System) 200 or some other suitable terminologies. The 5GS/EPS 200 may comprise one or more pieces of UE (User Equipment) 201, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown, the 5GS/EPS provides packet switching services, but those skilled in the art will readily understand that the various concepts presented throughout the present application may be extended to networks that provide circuit switching services or other cellular networks. The NG-RAN comprises an NR/Evolved Node B (gNB/eNB) 203 and other gNBs (eNBs) 204. The gNB (eNB) 203 provides user and control plane protocol termination towards the UE201. The gNB (eNB) 203 may be connected to other gNBs (eNBs) 204 via an Xn/X2 interface (e.g., backhaul). The gNB (eNB) 203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB (eNB) 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB(eNB) 203 is connected to the 5GC/EPC210 via an S1/NG interface. The 5GC/EPC210 comprises an MME (Mobility Management Entity)/AMF (Authentication Management Field)/SMF (Session Management Function) 211, other MMEs/AMFs/SMFs 214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, which is itself connected to the P-GW/UPF213. The P-GW provides UE IP address allocation and other functions. The P-GW/UPF213 is connected to the Internet service 230. The Internet service 230 comprises Internet protocol services corresponding to operators, which may specifically comprise the Internet, an intranet, an IMS (IP Multimedia Subsystem) and a packet switching streaming service.

As one embodiment, the UE201 corresponds to the first node device in the present application.

As one embodiment, the gNB (eNB) 201 corresponds to the second node device in the present application.

## Embodiment 3

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 for a first node device (UE or a gNB) and a second node device (a gNB or UE) using three layers: a layer 1, a layer 2, and a layer 3. The layer 1 (L1 layer) is the lowest layer and implements various PHY (physical layer) signal processing functions. The L1 layer will be referred to as a PHY301 herein. The layer 2 (L2 layer) 305 is above the PHY301 and is responsible for a link between the first node device and the second node device through the PHY301. The L2 layer 305 comprises a MAC (Medium Access Control) sublayer 302, an RLC (Radio Link Control) sublayer 303, and a PDCP (Packet Data Convergence Protocol) sublayer 304, which are terminated at the second node device. The PDCP sublayer 304 provides multiplexing between different radio bearers and logical channels. The PDCP sublayer 304 also provides security by encrypting data packets, and provides inter-cell mobility support of the first node device between the second node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first node devices. The MAC sublayer 302 is also responsible for HARQ operations. The RRC (Radio Resource Control) sublayer 306 in the layer 3 (L3 layer) in the control plane 300 is responsible for obtaining radio resources (i.e., radio bearers) and configuring lower layers using an RRC signaling between the second node device and the first node device. The radio protocol architecture for the user plane 350 comprises a layer 1 (L1 layer) and a layer 2 (L2 layer). The radio protocol architecture for the first node device and the second node device in the user plane 350 is substantially the same as the corresponding layers and sublayers in the control plane 300 for a physical layer 351, a PDCP sublayer 354 in the L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS flows and data radio bearers (DRBs) to support the diversity of services. Although not shown, the first node device may have several upper layers above the L2 layer 355, comprising a network layer (e.g., an IP layer) terminated at the P-GW on the network side and an application layer terminated at the other end of the connection (e.g., remote UE, and a server).

As one embodiment, the radio protocol architecture in FIG. 3 is applicable to the first node device in the present application.

As one embodiment, the radio protocol architecture in FIG. 3 is applicable to the second node device in the present application.

## Embodiment 4

Embodiment 4 shows a schematic diagram of a first node device and a second node device according to one embodiment of the present application, as shown in FIG. 4.

The first node device (450) may comprise a controller/processor 490, a data source/cache 480, a receiving processor 452, a transmitting device/receiving device 456 and a transmitting processor 455, and the transmitting device/receiving device 456 comprises an antenna 460.

The second node device (410) may comprise a controller/processor 440, a data source/cache 430, a receiving processor 412, a transmitting device/receiving device 416 and a transmitting processor 415, and the transmitting device/receiving device 416 comprises an antenna 420.

In a DL (Downlink), the upper-layer packet, such as high-layer information comprised in a first information block in the present application and the high-layer information comprised in M1 information blocks, is provided to the controller/-processor 440. The controller/processor 440 implements the functions of the L2 layer and above. In the DL, the controller/processor 440 provides packet header compression, encryption, packet segmentation and reordering, multiplexing between logical and transport channels, and radio resource allocation to the first node device 450 based on various priority metrics. The controller/processor 440 is also responsible for HARQ operations, retransmission of lost packets, and signalings to the first node device 450, such as the generation of the high-layer information comprised in the first information block in the present application and the high-layer information comprised in the M1 information blocks in the controller/processor 440. The transmitting processor 415 implements various signal processing functions for the L1 layer (i.e., a physical layer), comprising coding, interleaving, scrambling, modulation, power control/allocation, precoding, and physical layer control signaling generation, such as the generation of a physical layer signal carrying the first information block in the present application, the physical layer signal carrying the M1 information blocks, and the physical layer signal corresponding to a plurality of PDCCH candidates, which is completed in the transmitting processor 415. The generated modulation symbols are divided into parallel streams and each stream is mapped to a corresponding multi-carrier subcarrier and/or multi-carrier symbol, and then mapped by the transmitting processor 415 to the antenna 420 via the transmitting device 416 and transmitted in the form of a radio frequency signal. At the receiving end, each receiving device 456 receives the radio frequency signal through the corresponding antenna 460 thereof, and each receiving device 456 recovers the baseband information modulated onto the radio frequency carrier and provides the baseband information to the receiving processor 452. The receiving processor 452 implements various signal receiving processing functions of the L1 layer. The signal receiving processing functions comprise monitoring the physical layer signal carrying the first information block in the present application, the physical layer signal carrying M1 information blocks, and a plurality of PDCCH candidates, demodulating the multi-carrier symbols in the multi-carrier symbol stream based on various modulation solutions (e.g., binary phase shift keying (BPSK), and quadrature phase shift keying (QPSK)), and then descrambling, decoding and deinterleaving to recover data or control transmitted by the second node device 410 on the physical channel, and then providing the data and control signals to the controller/processor 490. The controller/processor 490 is responsible for the L2 layer and above, and the controller/processor 490 interprets the high-layer information comprised in the first information block in the present application and the high-layer information comprised in the M1 information blocks. The controller/processor may be associated with the memory 480 which stores program codes and data. The memory 480 may be referred to as a computer-readable medium.

In uplink (UL) transmission, similar to downlink transmission, high-layer information, comprising high-layer information comprised in a second information block in the present application, is generated by the controller/processor 490 and then undergoes various signal transmission processing functions for the L1 layer (i.e., physical layer) implemented by the transmitting processor 455, comprising that the generation of the physical layer signal carrying the second information block is completed by the transmitting processor 455, and then the transmitting processor 455 maps the physical layer signal to the antenna 460 via the transmitting device 456 and transmits the physical layer signal in the form of a radio frequency signal. The receiving device 416 receives the radio frequency signal through the corresponding antenna 420 thereof, and each receiving device 416 recovers the baseband information modulated onto the radio frequency carrier and provides the baseband information to the receiving processor 412. The receiving processor 412 implements various signal receiving processing functions for the L1 layer (i.e., a physical layer), comprising receiving and processing the physical layer signal carrying the second information block, and then providing data and/or control signals to the controller/processor 440. The functions of the L2 layer implemented in the controller/processor 440 comprise interpreting the high-layer information, comprising the interpretation of the high-layer information carried by the second information block. The controller/processor may be associated with a cache 430 which stores program codes and data. The cache 430 may be a computer-readable medium.

As one embodiment, the first node device 450 apparatus comprises: at least one processor and at least one memory, wherein the at least one memory comprises a computer program code; the at least one memory and the computer program code are configured to be used together with the at least one processor; and the first node device 450 apparatus at least: receives a first information block, the first information block being used for determining a first cell set, and the first cell set comprising a plurality of cells; and monitors a plurality of PDCCH candidates, wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

As one embodiment, the first node device 450 apparatus comprises: a memory storing a computer-readable instruction program, wherein the computer-readable instruction program generates an action when executed by at least one processor, and the action comprises: receiving a first information block, the first information block being used for determining a first cell set, and the first cell set comprising a plurality of cells; and monitoring a plurality of PDCCH candidates, wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

As one embodiment, the second node device 410 apparatus comprises: at least one processor and at least one memory, wherein the at least one memory comprises a computer program code; the at least one memory and the computer program code are configured to be used together with the at least one processor. The second node device 410 apparatus at least: sends a first information block, the first information block being used for determining a first cell set, and the first cell set comprising a plurality of cells; and determines a plurality of PDCCH candidates, wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

As one embodiment, the second node device 410 comprises: a memory storing a computer-readable instruction program, wherein the computer-readable instruction program generates an action when executed by at least one processor, and the action comprises: sending a first information block, the first information block being used for determining a first cell set, and the first cell set comprising a plurality of cells; and determining a plurality of PDCCH candidates, wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

As one embodiment, the first node device 450 is a piece of user equipment (UE).

As one embodiment, the second node device 410 is one base station device (gNB/eNB).

As one embodiment, the receiving device 456 (comprising the antenna 460), the receiving processor 452 and the controller/processor 490 are used for receiving the first information block in the present application.

As one embodiment, the receiving device 456 (comprising the antenna 460), the receiving processor 452 and the controller/processor 490 are used for monitoring the plurality of PDCCH candidates in the present application.

As one embodiment, the receiving device 456 (comprising the antenna 460), the receiving processor 452 and the controller/processor 490 are used for receiving the M1 information blocks in the present application.

As one embodiment, the transmitting device 456 (comprising the antenna 460), the transmitting processor 455 and the controller/processor 490 are used for sending the second information block in the present application.

As one embodiment, the transmitting device 416 (comprising the antenna 420), the transmitting processor 415 and the controller/processor 440 are used for sending the first information block in the present application.

As one embodiment, the transmitting device 416 (comprising the antenna 420), the transmitting processor 415 and the controller/processor 440 are used for determining the plurality of PDCCH candidates.

As one embodiment, the transmitting device 416 (comprising the antenna 420), the transmitting processor 415 and the controller/processor 440 are used for sending the M1 information blocks in the present application.

As one embodiment, the receiving device 416 (comprising the antenna 420), the receiving processor 412 and the controller/processor 440 are used for receiving the second information block in the present application.

## Embodiment 5

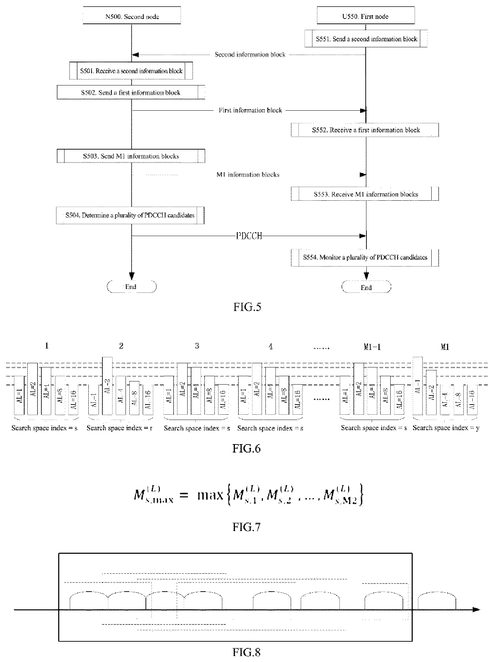

Embodiment 5 illustrates a flowchart of wireless signal transmission according to one embodiment of the present application, as shown in FIG. 5. In FIG. 5, a second node device N500 is a maintenance base station of a servicing cell of a first node device U550. It should be particularly noted that the order in this example does not limit the signal transmission order and implementation order in the present application.

For **the second node device N500**, a second information block is received in step S501, a first information block is sent in step S502, M1 information blocks are sent in step S503, and a plurality of PDCCH candidates are determined in step S504.

For **the first node device U550**, the second information block is sent in step S551, the first information block is received in step S552, M1 information blocks are received in step S553, and a plurality of PDCCH candidates are monitored in step S554.

In Embodiment 5, the first information block is received, the first information block is used for determining a first cell set, and the first cell set comprises a plurality of cells; the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level; the M1 information blocks are used for respectively determining index values of M1 search space sets and the number of PDCCH candidates respectively using the first aggregation level in the M1 search space sets, and M1 is a positive integer greater than 1; the second information block is used for indicating a capability parameter set of a sender of the second information block.

As one embodiment, any one of the M1 information blocks is later than the first information block.

As one embodiment, any one of the M1 information blocks is earlier than the first information block.

As one embodiment, one of the M1 information blocks is comprised in the first information block.

As one embodiment, any one of the M1 information blocks is an information block other than the first information block.

As one embodiment, any two of the M1 information blocks are independent.

As one embodiment, any two of the M1 information blocks are independently configured by a network device.

As one embodiment, any one of the M1 information blocks is transmitted via an air interface or a wireless interface.

As one embodiment, any one of the M1 information blocks comprises all or part of one high-layer signaling or one physical layer signaling.

As one embodiment, any one of the M1 information blocks comprises all or part of one RRC (Radio Resource Control) layer signaling, or any one of the M1 information blocks comprises all or part of one MAC (Medium Access Control) layer signaling.

As one embodiment, any one of the M1 information blocks is user equipment-specific (UE-specific).

As one embodiment, any one of the M1 information blocks is configured per carrier, or any one of the M1 information blocks is configured per BWP (bandwidth part), or any one of the M1 information blocks is configured per search space.

As one embodiment, any one of the M1 information blocks is configured per band or per frequency range (FR).

As one embodiment, any one of the M1 information blocks comprises an IE "SearchSpace".

As one embodiment, any one of the M1 information blocks comprises all or part of fields in the IE "SearchSpace".

As an embodiment, any one of the M1 information blocks comprises a field "searchSpaceId" and a field "nrofCandidates".

As one embodiment, any one of the M1 information blocks is used for configuring one search space set.

As one embodiment, any one of the M1 information blocks is used for determining all or part of parameters of one search space set.

As one embodiment, any two of the M1 information blocks belong to the same list.

As one embodiment, any two of the M1 information blocks belong to different lists respectively.

As one embodiment, in the M1 information blocks, there are two information blocks belonging to different lists respectively.

As one embodiment, the second information block is transmitted via an air interface or a wireless interface.

As one embodiment, the second information block comprises all or part of a high-layer signaling or a physical layer signaling.

As one embodiment, the second information block is earlier than the first information block.

As one embodiment, the second information block is later than the first information block.

As one embodiment, the second information block is earlier than the M1 information blocks.

As one embodiment, the second information block is later than the M1 information blocks.

As one embodiment, the second information block comprises all or part of an RRC signaling, or the second information block comprises all or part of a MAC layer signaling.

As one embodiment, the second information block is transmitted via a PUSCH or a PUCCH (Physical Uplink Control Channel).

As one embodiment, the second information block is used for indicating the capability of the first node device in the present application.

**Embodiment 6**

Embodiment 6 illustrates a schematic diagram of M1 search space sets according to one embodiment of the present application, as shown in FIG. 6. In FIG. 6, each rectangle represents the number of PDCCH candidates using one aggregation level (AL) in M1 search space sets, and the gray-filled rectangles belong to search space sets with the same index values.

In Embodiment 6, the M1 information blocks in the present application are used for respectively determining index values of M1 search space sets and the number of PDCCH candidates respectively using the first aggregation level in the M1 search space sets, and M1 is a positive integer greater than 1; any one of the M1 search space sets is a search space set for a cell in the first cell set in the present application, and in the M1 search space sets, all search space sets whose index values are equal to the first index value in the present application comprise an equal number of PDCCH candidates using the first aggregation level.

As one embodiment, independent PDCCH candidate number restrictions based on the index values of the search space sets are supported, which simplify the design while maximally ensuring the configuration flexibility.

As one embodiment, the technical feature "the M1 information blocks are used for respectively determining index values of M1 search space sets and the number of PDCCH candidates respectively using the first aggregation level in the M1 search space sets" comprises the following meaning: the M1 information blocks are used by the first node device in the present application for respectively determining the index values of the M1 search space sets and the number of PDCCH candidates respectively using the first aggregation level in the M1 search space sets.

As one embodiment, the technical feature "the M1 information blocks are used for respectively determining index values of M1 search space sets and the number of PDCCH candidates respectively using the first aggregation level in the M1 search space sets" comprises the following meaning: the M1 information blocks are used for respectively explicitly or implicitly indicating the index values of the M1 search space sets and the number of PDCCH candidates respectively using the first aggregation level in the M1 search space sets.

As one embodiment, the technical feature "the M1 information blocks are used for respectively determining index values of M1 search space sets and the number of PDCCH candidates respectively using the first aggregation level in the M1 search space sets" comprises the following meanings: the M1 information blocks respectively comprise M1 first fields and M1 second fields, the M1 first fields are used for respectively explicitly or implicitly indicating the index values of the M1 search space sets, and the M1 second fields are used for respectively explicitly or implicitly indicating the number of PDCCH candidates respectively using the first aggregation level in the M1 search space sets.

As one embodiment, the technical feature "the M1 information blocks are used for respectively determining index values of M1 search space sets and the number of PDCCH candidates respectively using the first aggregation level in the M1 search space sets" comprises the following meanings: the M1 information blocks respectively comprise M1 "searchSpaceId" fields and M1 "nrofCandidates" fields, the M1 "searchSpaceId" fields are used for respectively explicitly or implicitly indicating the index values of the M1 search space sets, and the M1 "nrofCandidates" fields are used for respectively explicitly or implicitly indicating the number of PDCCH candidates respectively using the first aggregation level in the M1 search space sets.

As one embodiment, the technical feature "the M1 information blocks are used for respectively determining index values of M1 search space sets and the number of PDCCH candidates respectively using the first aggregation level in the M1 search space sets" comprises the following meanings: the M1 information blocks respectively comprise M1 "searchSpaceId" fields and M1 "nrofCandidates" fields, the M1 "searchSpaceId" fields are used for respectively explicitly or implicitly indicating the index values of the M1 search space sets, and the M1 "nrofCandidates" fields are used for respectively explicitly or implicitly indicating the number of PDCCH candidates respectively using any one of the supported aggregation levels in the M1 search space sets.

As one embodiment, "one search space set for one cell" means that the search space set is a search space set configured for the cell.

As one embodiment, "one search space set for one cell" means that the search space set is configured through a configuration signaling specific to the cell.

As one embodiment, "one search space set for one cell" means that the search space set is a search space set used for determining PDCCH candidates for scheduling the cell.

As one embodiment, "one search space set for one cell" means that the search space set is a search space set used for the cell.

As one embodiment, "one search space set for one cell" means that the search space set is a search space set configured by a PDCCH configuration (PDCCH-Config) used for the cell.

As one embodiment, "one search space set for one cell" means that the search space set is a search space set of the number of PDCCH candidates used for the cell.

As one embodiment, "one search space set for one cell" means that the search space set is a search space set configured by an "SearchSpace" IE for the cell.

As one embodiment, in the M1 search space sets, there are two search space sets for two different cells in the first cell set respectively.

As one embodiment, in the M1 search space sets, there are two search space sets for the same cell in the first cell set respectively.

As one embodiment, the M1 search space sets comprise all search space sets for one cell in the first cell set.

As one embodiment, there is a search space set other than the M1 search space sets, which is a search space set for one cell in the first cell set.

As one embodiment, the first cell set comprises R1 cells, R1 search space lists are configured for the R1 cells respectively, any one of the R1 search space lists comprises at least one search space set, and R1 is a positive integer greater than 1; any one of the M1 search space sets belongs to one of the R1 search space lists.

As one embodiment, index values of Q3 search space sets comprised in the M1 search space sets are equal to the first index value, and Q3 is a positive integer not greater than M1 but greater than 1; the Q3 search space sets all comprise an equal number of PDCCH candidates using the first aggregation level.

As one embodiment, the index values of Q3 search space sets comprised in the M1 search space sets are equal to the first index value, and Q3 is a positive integer not greater than M1 but greater than 1; the Q3 search space sets all comprise an equal number of PDCCH candidates using the same supported aggregation level.

As one embodiment, the index values of Q3 search space sets comprised in the M1 search space sets configured by Q3 information blocks in the M1 information blocks are equal to the first index value, and Q3 is a positive integer not greater than M1 but greater than 1; the Q3 search space sets all comprise an equal number of PDCCH candidates using the first aggregation level configured by Q3 information blocks in the M1 information blocks.

## Embodiment 7

Embodiment 7 illustrates a schematic diagram of M2 number values according to one embodiment of the present application, as shown in FIG. 7. In FIG. 7, $M_{s,1}^{(L)}, M_{s,2}^{(L)}, ..., M_{s,M2}^{(L)}$ represents M2 number values, $M_{s,\max}^{(L)}$ represents the maximum number value of the M2 number values, s represents a first search space set, and *L* represents a first aggregation level.

In Embodiment 7, the number of PDCCH candidates using the first aggregation level in the present application that are comprised in any one search space set whose index value is equal to the first index value in the present application and which is for the first cell set in the present application is a feature number value, the feature number value is one of M2 number values, and M2 is a positive integer greater than 1; any one of the M2 number values is the number of PDCCH candidates using the first aggregation level that are comprised in a search space set whose index value is equal to the first index value and which is for at least one cell, and the maximum number value of the M2 number values is used for determining PDCCH candidates using the first aggregation level from the first search space set.

As one embodiment, simultaneously monitoring a DCI format for scheduling a plurality of cells and a DCI format for scheduling a single cell ensures the distribution of PDCCH candidates with nested structure, thereby reducing the blocking probability.

As one embodiment, the feature number value is a positive integer.

As one embodiment, the feature number value is not greater than 8.

As one embodiment, the feature number value is greater than 8.

As one embodiment, the feature number value is equal to one of 1, 2, 3, 4, 5, 6, and 8.

As one embodiment, the number of PDCCH candidates using the first aggregation level that are comprised in any one search space set whose index value is equal to the first index value and which is for any one cell in the first cell set is equal to the feature number value.

As one embodiment, any one of the M2 number values is a non-negative integer.

As one embodiment, any one of the M2 number values is not greater than 8.

As one embodiment, any one of the M2 number values is equal to one of 0, 1, 2, 3, 4, 5, 6, and 8.

As one embodiment, any one of the M2 number values other than the feature number value is equal to one of 0, 1, 2, 3, 4, 5, 6, and 8.

As one embodiment, the M2 number values correspond to M2 CIF (carrier indicator field) values, respectively.

As one embodiment, any one of the M2 number values is a $M_{s,n_{CI}}^{(L)}$ value.

As one embodiment, any one of the M2 number values is a $M_{s,n_{CI}}^{(L)}$ value in a search space calculation formula.

As one embodiment, there are two equal number values of the M2 number values.

As one embodiment, any two of the M2 number values are not equal.

As one embodiment, the number values other than the feature number value in the M2 number values correspond to (M2-1) CIF (carrier indicator field) values, respectively.

As one embodiment, any one of the M2 number values other than the feature number value is a $M_{s,n_{CI}}^{(L)}$ value.

As one embodiment, any one of the M2 number values other than the feature number value is a $M_{s,n_{CI}}^{(L)}$ value in the search space calculation formula.

As one embodiment, the M2 number values correspond to M2 CIF values, respectively, and cells represented respectively by the M2 CIF values are configured with the same scheduling cell.

As one embodiment, the M2 number values correspond to M2 cells, respectively, and the M2 cells are configured with the same scheduling cell.

As one embodiment, the M2 number values correspond to M2 cell sets, respectively, the first cell set is one of the M2 cell sets, any one of the M2 cell sets comprises at least one cell, and all cells in the M2 cell sets are configured with the same scheduling cell.

As one embodiment, the M2 number values are used in the same search space set for the same cell.

As one embodiment, any one of the M2 number values is the number of PDCCH candidates using the first aggregation level that are comprised in a search space set whose index value is equal to the first index value and which is for cells with the same scheduling cell.

As one embodiment, any one of the M2 number values is the number of PDCCH candidates using the first aggregation level that are comprised in a search space set whose index value is equal to the first index value and which is for cells configured with the same scheduling cell.

As one embodiment, one of the M2 number values is equal to the number of PDCCH candidates using the first aggregation level that are comprised in a search space set whose index value is equal to the first index value and which is for one cell other than the first cell set.

As one embodiment, the technical feature "the maximum number value of the M2 number values is used for determining PDCCH candidates using the first aggregation level from the first search space set" comprises the following meaning: the maximum number value of the M2 number values is used by the first node device in the present application for determining PDCCH candidates using the first aggregation level from the first search space set.

As one embodiment, the technical feature "the maximum number value of the M2 number values is used for determining PDCCH candidates using the first aggregation level from the first search space set" comprises the following meaning: the maximum number value of the M2 number values is used for determining PDCCH candidates using the first aggregation level from the first search space set and being capable of simultaneously scheduling a plurality of PDSCHs or a plurality of PUSCHs.

As one embodiment, the technical feature "the maximum number value of the M2 number values is used for determining PDCCH candidates using the first aggregation level from the first search space set" comprises the following meaning: the maximum number value of the M2 number values is used for determining PDCCH candidates using the first aggregation level from the first search space set for a DCI format simultaneously scheduling a plurality of cells comprising PDSCHs or a plurality of cells comprising PUSCHs.

As one embodiment, the technical feature "the maximum number value of the M2 number values is used for determining PDCCH candidates using the first aggregation level from the first search space set" comprises the following meaning: the maximum number value of the M2 number values is used for determining PDCCH candidates using the first aggregation level from the first search space set and scheduling at least one cell in the first cell set.

As one embodiment, the technical feature "the maximum number value of the M2 number values is used for determining PDCCH candidates using the first aggregation level from the first search space set" comprises the following meaning: the maximum number value of the M2 number values is used for determining PDCCH candidates using the first aggregation level from the first search space set and scheduling any cell with the same CIF value in one cell group.

As one embodiment, the technical feature "the maximum number value of the M2 number values is used for determining PDCCH candidates using the first aggregation level from the first search space set" comprises the following meaning: the maximum value of the M2 number values is used for determining an CCE occupied by PDCCH candidates using the first aggregation level from the first search space set.

As one embodiment, the technical feature "the maximum number value of the M2 number values is used for determining PDCCH candidates using the first aggregation level from the first search space set" comprises the following meaning: the maximum number value of the M2 number values is used for determining at least one CCE occupied by one PDCCH candidate using the first aggregation level from the first search space set.

As one embodiment, the technical feature "the maximum number value of the M2 number values is used for determining PDCCH candidates using the first aggregation level from the first search space set" comprises the following meaning: the maximum number value of the M2 number values is used for determining the distribution of PDCCH candidates using the first aggregation level in the first search space set.

As one embodiment, the technical feature "the maximum number value of the M2 number values is used for determining PDCCH candidates using the first aggregation level from the first search space set" is achieved by satisfying the following:

the first search space set s is associated with a CORESET p, L represents the first aggregation level, and an index of a CCE occupied by a PDCCH candidate $m_{s,n_{SI}}^{(L)}$ using the first aggregation level satisfies

$$L \cdot \left\{ \left( Y_{p,n_{s,f}^{\mu}} + \left\lfloor \frac{m_{s,n_{SI}}^{(L)} \cdot N_{\text{CCE},p}}{L \cdot M_{s,\max}^{(L)}} \right\rfloor + n_{SI} \right) \bmod \left\lfloor N_{\text{CCE},p}/L \right\rfloor \right\} + i$$

wherein $n_{SI}$ represents an index value or identification value or indication value corresponding to or configured for one cell scheduled by the PDCCH candidate $m_{s,n_{SI}}^{(L)}$, $i = 0, \cdots, L-1$, $Y_{p,n_{s,f}^{\mu}}$ is a value related to the CORESET p, $N_{\text{CCE},p}$ represents the number of CCEs in the CORESET p, and $M_{s,\max}^{(L)}$ represents the maximum number value of the M2 number values.

As one embodiment, the technical feature "the maximum number value of the M2 number values is used for determining PDCCH candidates using the first aggregation level from the first search space set" is achieved by satisfying the following:

the first search space set s is associated with the CORESET p, L represents the first aggregation level, and the index of the CCE occupied by the PDCCH candidate $m_{s,n_{SI}}^{(L)}$ using the first aggregation level satisfies

$$L \cdot \left\{ \left( Y_{p,n_{s,f}^{\mu}} + \left\lfloor \frac{m_{s,n_{SI}}^{(L)} \cdot N_{\text{CCE},p}}{L \cdot M_{s,\max}^{(L)}} \right\rfloor + n_{SI} \right) \bmod \left\lfloor N_{\text{CCE},p}/L \right\rfloor \right\} + i$$

wherein $n_{SI}$ represents the index value or identification value or indication value corresponding to or configured for the first cell set scheduled by the PDCCH candidate $m_{s,n_{SI}}^{(L)}$, $i = 0, \cdots, L-1$, $Y_{p,n_{s,f}^{\mu}}$ is a value related to the CORESET p, $N_{\text{CCE},p}$ represents the number of CCEs in the CORESET p, and $M_{s,\max}^{(L)}$ represents the reference number value.

As one embodiment, the technical feature "the maximum number value of the M2 number values is used for determining PDCCH candidates using the first aggregation level from the first search space set" is achieved by satisfying the following:

the first search space set s is associated with the CORESET p, L represents the first aggregation level, and the index of the CCE occupied by the PDCCH candidate $m_{s,n_{SI}}^{(L)}$ using the first aggregation level satisfies

$$L \cdot \left\{ \left( Y_{p,n_{s,f}^{\mu}} + \left\lfloor \frac{m_{s,n_{SI}}^{(L)} \cdot N_{\text{CCE},p}}{L \cdot M_{s,\max}^{(L)}} \right\rfloor + n_{SI} \right) \bmod \left\lfloor N_{\text{CCE},p}/L \right\rfloor \right\} + i$$

wherein $n_{SI}$ represents the index value or identification value or indication value corresponding to or configured for one cell subset comprised in the first cell set scheduled by the PDCCH candidate $m_{s,n_{SI}}^{(L)}$, $i = 0, \cdots, L-1$, $Y_{p,n_{s,f}^{\mu}}$ is a value

related to the CORESET $p$, $N_{CCE,p}$ represents the number of CCEs in the CORESET $p$, and $M_{s,\max}^{(L)}$ represents the maximum number value of the M2 number values.

As one embodiment, the technical feature "the maximum number value of the M2 number values is used for determining PDCCH candidates using the first aggregation level from the first search space set" is achieved by satisfying the following:

the first search space set s is associated with the CORESET $p$, $L$ represents the first aggregation level, and the index of the CCE occupied by the PDCCH candidate $m_{s,n_{SI}}^{(L)}$ using the first aggregation level satisfies

$$L \cdot \left\{ \left( Y_{p,n_{s,f}^{\mu}} + \left\lfloor \frac{m_{s,n_{SI}}^{(L)} \cdot N_{\text{CCE},p}}{L \cdot M_{s,\max}^{(L)}} \right\rfloor + n_{SI} \right) mod \left\lfloor N_{\text{CCE},p}/L \right\rfloor \right\} + i$$

wherein $n_{SI}$ represents the index value or identification value or indication value corresponding to or configured for one cell in the first cell set scheduled by the PDCCH candidate $m_{s,n_{SI}}^{(L)}$, $i = 0, \cdots, L-1$, $Y_{p,n_{s,f}^{\mu}}$ is a value related to the CORESET $p$, $N_{\text{CCE},p}$ represents the number of CCEs in the CORESET $p$, and $M_{s,\max}^{(L)}$ represents the maximum number value of the M2 number values.

## **Embodiment 8**

Embodiment 8 illustrates a schematic diagram of a first cell set according to one embodiment of the present application, as shown in FIG. 8. In FIG. 8, each arc-shaped top area represents one cell, each cell surrounded by a dotted box constitutes one cell set in W1 cell sets or one cell set in W2 cell sets, and cells surrounded by a solid thick line box constitute a first cell set.

In Embodiment 8, the first information block in the present application is used for determining W1 cell sets and W2 cell sets, any one of the W1 cell sets comprises at least one cell, any one of the W2 cell sets comprises at least one cell, W1 is a positive integer greater than 1, and W2 is a positive integer greater than 1; the first cell set in the present application comprises all cells comprised in any one of the W1 cell sets, and the first cell set comprises all cells comprised in any one of the W2 cell sets.

As one embodiment, by limiting the number of PDCCH candidates to be equal in the first cell set, the interdependence between the distribution of PDCCH candidates and the simultaneously scheduled cells is avoided, thereby avoiding the chicken and egg problem.

As one embodiment, the technical feature "the first information block is used for determining W1 cell sets and W2 cell sets" comprises the following meaning: part or all comprised in the first information block is used for explicitly or implicitly indicating the W1 cell sets and the W2 cell sets.

As one embodiment, the technical feature "the first information block is used for determining W1 cell sets and W2 cell sets" comprises the following meanings: part or all comprised in the first information block is used for explicitly or implicitly indicating the W1 cell sets, W1 is equal to W2, and the W2 cell sets are identical to the W1 cell sets in one-to-one correspondence.

As one embodiment, the technical feature "the first information block is used for determining W1 cell sets and W2 cell sets" comprises the following meanings: part or all comprised in the first information block is used for explicitly or implicitly indicating the W1 cell sets, W1 is equal to W2, and the W2 cell sets are the W1 cell sets.

As one embodiment, the technical feature "the first information block is used for determining W1 cell sets and W2 cell sets" comprises the following meanings: part or all comprised in the first information block is used for explicitly or implicitly indicating a list composed of the W1 cell sets and a list composed of the W2 cell sets.

As one embodiment, the technical feature "the first information block is used for determining W1 cell sets and W2 cell sets" comprises the following meaning: two fields or two IEs or two subfields comprised in the first information are used for explicitly or implicitly indicating the W1 cell sets and the W2 cell sets, respectively.

As one embodiment, the technical feature "the first information block is used for determining W1 cell sets and W2 cell sets" comprises the following meaning: the same field or the same IE comprised in the first information block is used for explicitly or implicitly indicating the W1 cell sets and the W2 cell sets.

As one embodiment, the technical feature "the first information block is used for determining W1 cell sets and W2 cell sets" comprises the following meaning: part or all comprised in the first information block is used for explicitly or implicitly indicating cells comprised in each cell set in the W1 cell sets and cells comprised in each cell set in the W2 cell sets.

As one embodiment, the technical feature "the first information block is used for determining W1 cell sets and W2 cell sets" comprises the following meaning: part or all comprised in the first information block is used for explicitly or implicitly adding the W1 cell sets to one list and adding the W2 cell sets to another list.

As one embodiment, the technical feature "the first information block is used for determining W1 cell sets and W2 cell sets" comprises the following meanings: part or all comprised in the first information block is used for explicitly or implicitly adding cells to constitute one of the W1 cell sets, and part or all comprised in the first information block is used for explicitly or implicitly adding cells to constitute one of the W2 cell sets.

As one embodiment, the technical feature "the first information block is used for determining W1 cell sets and W2 cell sets" comprises the following meaning: part or all comprised in the first information block is used for explicitly or implicitly indicating the number of cells comprised in at least one of the W1 cell sets and the number of cells comprised in at least one of the W2 cell sets.

As one embodiment, the technical feature "the first information block is used for determining W1 cell sets and W2 cell sets" comprises the following meaning: part or all comprised in the first information block is used for explicitly or implicitly indicating the upper limit value of the number of cells comprised in at least one of the W1 cell sets and the upper limit value of the number of cells comprised in at least one of the W2 cell sets.

As one embodiment, the technical feature "the first information block is used for determining W1 cell sets and W2 cell sets" comprises the following meanings: all or part comprised in the first information block are/is used for explicitly or implicitly indicating all cells comprised in the W1 cell sets, and all cells comprised in the W1 cell sets constitute the W1 cell sets according to predefined rules; all or part comprised in the first information block are/is used for explicitly or implicitly indicating all cells comprised in the W2 cell sets, and all cells comprised in the W2 cell sets constitute the W2 cell sets according to predefined rules.

As one embodiment, the technical feature "the first information block is used for determining W1 cell sets and W2 cell sets" comprises the following meanings: all or part comprised in the first information block are/is used for explicitly or implicitly indicating the first cell set in the present application, and all cells comprised in the first cell set constitute the W1 cell sets and the W2 cell sets according to predefined rules.

As one embodiment, the two descriptions "the first information block is used for determining W1 cell sets and W2 cell sets" and "all or part comprised in the first information block are/is used for explicitly or implicitly determining the W1 cell set" are equivalent or may be used interchangeably.

As one embodiment, the technical feature "the first information block is used for determining W1 cell sets and W2 cell sets" comprises the following meanings: all or part comprised in the first information block are/is used for explicitly or implicitly indicating the W1 cell set, and the W1 cell sets are used for determining the W2 cell sets.

As one embodiment, the technical feature "the first information block is used for determining W1 cell sets and W2 cell sets" comprises the following meaning: all or part comprised in the first information block are/is used for explicitly or implicitly indicating the W1 cell sets, and one of the W1 cell sets comprises all cells comprised in one of the W2 cell sets.

As one embodiment, the technical feature "the first information block is used for determining W1 cell sets and W2 cell sets" comprises the following meanings: all or part comprised in the first information block are/is used for explicitly or implicitly indicating the W1 cell sets, and all cells comprised in any one of the W2 cell sets belong to one of the W1 cell sets.

As one embodiment, the technical feature "the first information block is used for determining W1 cell sets and W2 cell sets" comprises the following meanings: all or part comprised in the first information block are/is used for explicitly or implicitly indicating all cells comprised in the W1 cell sets and all cells comprised in the W2 cell sets; all cells comprised in the W1 cell sets are indexed in sequence according to $0, \cdots, N_{cell1} - 1$, wherein $N_{cell1}$ represents the total number of all cells comprised in the W1 cell sets, and all cells comprised in the W2 cell sets are indexed in sequence according to $0, \cdots, N_{cell2} - 1$, wherein $N_{cell2}$ represents the total number of all cells comprised in the W2 cell sets; $d^{(P1)}$ represents one cell set comprising P1 cells in the W1 cell sets, $d^{(P2)}$ represents one cell set comprising P2 cells in the W2 cell sets, and an index of cells comprised in the cell set $d^{(P1)}$ satisfies

$$P1 \cdot \left\{ \left\lfloor \frac{d^{(P1)} \cdot N_{cell1}}{P1 \cdot M^{(P1)}} \right\rfloor mod \lfloor N_{cell1}/p\,1 \rfloor \right\} + p$$

wherein $p = 0, \cdots, P1 - 1$, and $M^{(P1)}$ represents the number of cell sets comprising $P1$ cells in the W1 cell sets; the index of the cells comprised in the cell set $d^{(P2)}$ satisfies

$$P2 \cdot \left\{ \left\lfloor \frac{d^{(P2)} \cdot N_{cell2}}{P2 \cdot M^{(P2)}} \right\rfloor mod \lfloor N_{cell2}/P2 \rfloor \right\} + p$$

wherein $p = 0, \cdots, P2 - 1$, and $M^{(P2)}$ represents the number of cell sets comprising $P2$ cells in the W2 cell sets.

As one embodiment, the technical feature "the first information block is used for determining W1 cell sets and W2 cell sets" comprises the following meanings: all cells comprised in any one of the W2 cell sets belong to one of the W1 cell sets; all or part comprised in the first information block are/is used for explicitly or implicitly indicating the first cell set in the present application, and all cells comprised in the first cell set are indexed in sequence according to $0, \cdots, N_{cell} - 1$, wherein $N_{cell}$ represents the total number of all cells comprised in the first cell set, $d^{(P)}$ represents a cell set comprising P cells in the W1 cell sets, and an index of cells comprised in the cell set $d^{(P)}$ satisfies

$$P \cdot \left\{ \left\lfloor \frac{d^{(P)} \cdot N_{cell}}{Q \cdot M^{(P)}} \right\rfloor mod \lfloor N_{cell}/P \rfloor \right\} + p$$

wherein $p = 0, \cdots, P - 1$, and $M^{(P)}$ represents the number of cell sets comprising $P$ cells in the W1 cell sets.

As one embodiment, the W1 cell sets constitute one cell set list, and the W2 cell sets constitute one cell set list.

As one embodiment, any one cell comprised in any one of the W1 cell sets is a cell that may transmit a PDSCH (Physical Downlink Shared Channel), and any one cell comprised in any one of the W2 cell sets is a cell that may transmit a PUSCH (Physical Uplink Shared Channel).

As one embodiment, any one cell comprised in any one of the W1 cell sets is a cell that may transmit the PUSCH (Physical Uplink Shared Channel), and any one cell comprised in any one of the W2 cell sets is a cell that may transmit the PDSCH (Physical Downlink Shared Channel).

As one embodiment, any two of the W1 cell sets are not the same.

As one embodiment, there are two identical cell sets of the W1 cell sets.

As one embodiment, any two of the W2 cell sets are not the same.

As one embodiment, there are two identical cell sets of the W2 cell sets.

As one embodiment, any one of the W1 cell sets is a set of cells to which PDSCHs that may be scheduled simultaneously by one DCI format or one PDCCH belong respectively, and any one of the W2 cell sets is a set of cells to which PUSCHs that may be scheduled simultaneously by one DCI format or one PDCCH belong respectively.

As one embodiment, any one of the W1 cell sets is a set of cells to which PUSCHs that may be scheduled simultaneously by one DCI format or one PDCCH belong respectively, and any one of the W2 cell sets is a set of cells to which PDSCHs that can be scheduled simultaneously by one DCI format or one PDCCH belong respectively.

As one embodiment, any one of the W1 cell sets is one list of cells, and any one of the W2 cell sets is one list of cells.

As one embodiment, all cells comprised in one of the W1 cell sets belong to the same band.

As one embodiment, all cells comprised in one of the W2 cell sets belong to the same band.

As one embodiment, all cells comprised in one of the W1 cell sets belong to the same frequency range (FR).

As one embodiment, all cells comprised in one of the W2 cell sets belong to the same frequency range.

As one embodiment, all cells comprised in one of the W1 cell sets use the same duplexing mode (Time Division Duplexing (TDD) or Frequency Division Duplexing (FDD)).

As one embodiment, all cells comprised in one of the W2 cell sets use the same duplexing mode.

As one embodiment, one of the W1 cell sets comprises two intra-band cells.

As one embodiment, one of the W2 cell sets comprises two intra-band cells.

As one embodiment, one of the W1 cell sets comprises two inter-band cells.

As one embodiment, one of the W2 cell sets comprises two inter-band cells.

As one embodiment, one of the W1 cell sets comprises two cells belonging to different bands respectively.

As one embodiment, one of the W2 cell sets comprises two cells belonging to different bands respectively.

As one embodiment, two cells comprised in one of the W1 cell sets belong to two different frequency ranges respectively.

As one embodiment, two cells comprised in one of the W2 cell sets belong to two different frequency ranges respectively.

As one embodiment, two cells comprised in one of the W1 cell sets use different duplexing modes (TDD or FDD) respectively.

As one embodiment, two cells comprised in one of the W2 cell sets use different duplexing modes (TDD or FDD) respectively.

As one embodiment, all cells other than a self-scheduled cell comprised in any one of the W1 cell sets belong to the same band or the same frequency range.

As one embodiment, all cells other than the self-scheduled cell comprised in any one of the W2 cell sets belong to the same band or the same frequency range.

As one embodiment, all cells other than the self-scheduled cell comprised in any one of the W1 cell sets use the same duplexing mode (TDD or FDD).

As one embodiment, all cells other than the self-scheduled cell comprised in any one of the W2 cell sets use the same duplexing mode (TDD or FDD).

As one embodiment, any one of the W1 cell sets comprises a plurality of cells.

As one embodiment, in the W1 cell sets, there is at least one cell set that comprises only one cell.

As one embodiment, any one of the W2 cell sets comprises a plurality of cells.

As one embodiment, in the W2 cell sets, there is at least one cell set that comprises only one cell.

As one embodiment, W1 is equal to W2.

As one embodiment, W1 is not equal to W2.

As an embodiment, W1 is equal to W2, the W1 cell sets are in one-to-one correspondence with the W2 cell sets, and any one of the W1 cell sets comprises all cells comprised in the corresponding cell set in the W2 cell sets.

As one embodiment, W1 is equal to W2, and the W1 cell sets are identical to the W2 cell sets in one-to-one correspondence.

As one embodiment, W1 is equal to W2, and the W2 cell sets are the W1 cell sets.

As one embodiment, in the W1 cell sets, there is one cell set that is different from any one of the W2 cell sets.

As one embodiment, in the W2 cell sets, there is one cell set that is different from any one of the W1 cell sets.

As one embodiment, in the W1 cell sets, there is one cell set that is exactly the same as one of the W2 cell sets.

As one embodiment, the first cell set is a union of the W1 cell sets and the W2 cell sets.

As one embodiment, any one cell comprised in any one of the W1 cell sets belongs to the first cell set, and any one cell comprised in any one of the W2 cell sets belongs to the first cell set.

As one embodiment, all cells comprised in the W1 cell sets and all cells comprised in the W2 cell sets together constitute the first cell set.

As one embodiment, the first cell set is a superset of any one of the W1 cell sets, and the first cell set is a superset of any one of the W2 cell sets.

As one embodiment, the first cell set only comprises cells comprised in the W1 cell sets or the W2 cell sets.

As one embodiment, the first cell set also comprises cells other than the W1 cell sets or other than the W2 cell sets.

As one embodiment, the first cell set comprises any one cell comprised in any one of the W1 cell sets, and the first cell set comprises any one cell comprised in any one of the W2 cell sets.

## Embodiment 9

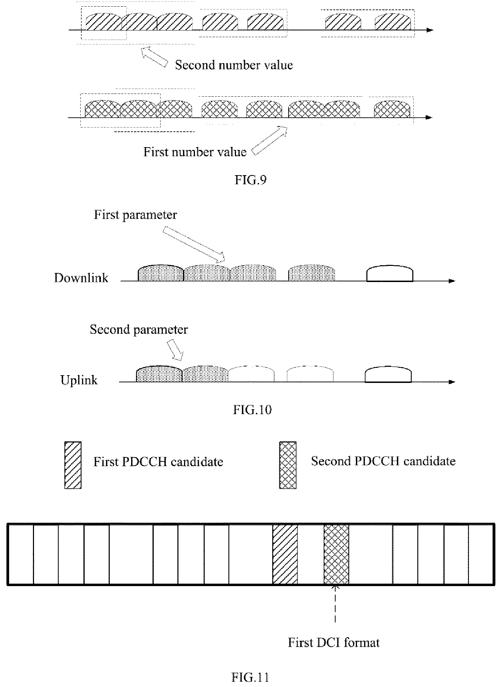

Embodiment 9 illustrates a schematic diagram of a first number value and a second number value according to one embodiment of the present application, as shown in FIG. 9. In FIG. 9, each arc-shaped top area padded with cross lines represents one servicing cell comprised in one of W1 cell sets, and each arc-shaped top area padded with oblique lines represents one servicing cell comprised in one of W2 cell sets; servicing cells padded with cross lines in each dotted box constitute one of the W1 cell sets, and the servicing cells padded with oblique lines in each dotted box constitute one of the W2 cell sets; the first number value is equal to the number of servicing cells in a cell set comprising the largest number of servicing cells in the W1 cell sets, and the second number value is equal to the number of servicing cells in a cell set comprising the largest number of servicing cells in the W2 cell sets.

In Embodiment 9, a first number value is equal to the maximum value of the number of cells respectively comprised in the W1 cell sets in the present application, a second number value is equal to the maximum value of the number of cells respectively comprised in the W2 cell sets in the present application, the first number value is a positive integer, and the second number value is a positive integer; the first number value is used for determining a first candidate size, the second number value is used for determining a second candidate size, and a size of the feature DCI format in the present application is equal to a larger value between the first candidate size and the second candidate size.

As one embodiment, a size of a DCI format is equal to a larger value between the first candidate size and the second candidate size to reduce the blind detection overhead.

As one embodiment, the first number value is greater than 1.

As one embodiment, the first number value is not greater than the number of cells scheduled simultaneously by one DCI format or one PDCCH indicated by a capability report of the first node.

As one embodiment, the first number value is not greater than the number of cells to which PDSCHs belong respectively, and the PDSCHs are scheduled simultaneously by one DCI format or one PDCCH indicated by the capability report of the first node.

As one embodiment, the technical feature "a first number value is equal to the maximum value of the number of cells respectively comprised in the W1 cell sets" comprises the following meaning: the first number value is equal to the maximum cell number value respectively comprised in the W1 cell sets.

As one embodiment, the technical feature "a first number value is equal to the maximum number value of the number of cells respectively comprised in the W1 cell sets" comprises the following meanings: W1 number values are respectively equal to the number of cells respectively comprised in the W1 cell sets, and the first number value is equal to the maximum number value of the W1 number values.

As one embodiment, the technical feature "a first number value is equal to the maximum number value of the number of cells respectively comprised in the W1 cell sets" comprises the following meaning: the first number value is equal to the number of cells comprised in a cell set comprising the largest number of cells in the W1 cell sets.

As one embodiment, the second number value is greater than 1.

As one embodiment, the second number value is not greater than the number of cells scheduled simultaneously by one DCI format or one PDCCH indicated by the capability report of the first node.

As one embodiment, the second number value is not greater than the number of cells to which the PUSCHs belong respectively, and the PUSCHs are scheduled simultaneously by one DCI format or one PDCCH indicated by the capability report of the first node.

As one embodiment, the technical feature "a second number value is equal to the maximum value of the number of cells respectively comprised in the W2 cell sets" comprises the following meaning: the second number value is equal to the maximum value of the number of cells respectively comprised in the W2 cell sets.

As one embodiment, the technical feature "a second number value is equal to the maximum value of the number of cells respectively comprised in the W2 cell sets" comprises the following meanings: W2 number values are respectively equal to the number of cells respectively comprised in the W2 cell sets, and the second number value is equal to the maximum value of the W2 number values.

As one embodiment, the technical feature "a second number value is equal to the maximum value of the number of cells respectively comprised in the W2 cell sets" comprises the following meaning: the second number value is equal to the number of cells comprised in a cell set comprising the largest number of cells in the W2 cell sets.

As one embodiment, the second number value is not greater than the first number value.

As one embodiment, the second number value is equal to the first number value.

As one embodiment, the second number value is less than the first number value.

As one embodiment, the first candidate size is equal to a size of one DCI format for scheduling a PUSCH.

As one embodiment, the second candidate size is equal to a size of one DCI format for scheduling a PDSCH.

As one embodiment, the first candidate size is equal to a size of one DCI format for scheduling a PDSCH.

As one embodiment, the second candidate size is equal to a size of one DCI format for scheduling a PUSCH.

As one embodiment, the first candidate size is equal to a size of one DCI format for scheduling a PUSCH before size alignment.

As one embodiment, the second candidate size is equal to a size of one DCI format for scheduling a PDSCH before size alignment.

As one embodiment, the first candidate size is equal to a size of one DCI format for scheduling a PDSCH before size alignment.

As one embodiment, the second candidate size is equal to a size of one DCI format for scheduling a PUSCH before size alignment.

As one embodiment, the first candidate size is equal to a size of one DCI format before size alignment.

As one embodiment, the first candidate size is equal to a size of a DCI format before one or more fields in one DCI format are not padded.

As one embodiment, the first candidate size is equal to a size of one DCI format.

As one embodiment, the second candidate size is equal to a size of one DCI format before size alignment.

As one embodiment, the second candidate size is equal to a size of a DCI format before one or more fields in one DCI format are not padded.

As one embodiment, the second candidate size is equal to a size of one DCI format.

As one embodiment, the first candidate size is equal to a size of a DCI format 0_K before size alignment, and the second candidate size is equal to a size of a DCI format 1_K before size alignment, wherein K is a positive integer greater than 2. As one auxiliary embodiment of the above embodiment, K is equal to 3. As one auxiliary embodiment of the above embodiment, K is equal to 4. As one auxiliary embodiment of the above embodiment, K is equal to 5.

As one embodiment, the first candidate size is equal to a size of a DCI format 1_K before size alignment, and the second candidate size is equal to a size of a DCI format 0_K before size alignment, wherein K is a positive integer greater than 2. As one auxiliary embodiment of the above embodiment, K is equal to 3. As one auxiliary embodiment of the above embodiment, K is equal to 4. As one auxiliary embodiment of the above embodiment, K is equal to 5.

As one embodiment, the first candidate size is equal to a positive integer, and the second candidate size is equal to a positive integer.

As one embodiment, the technical feature "the first number value is used for determining a first candidate size" comprises the following meaning: the first number value is used by the first node device or the second node device in the present application for determining the first candidate size.

As one embodiment, the technical feature "the second number value is used for determining a second candidate size" comprises the following meaning: the second number value is used by the first node device or the second node device in the present application for determining the second candidate size.

As one embodiment, the technical feature "the first number value is used for determining a first candidate size" comprises the following meaning: the first candidate size is linearly related to the first number value.

As one embodiment, the technical feature "the second number value is used for determining a second candidate size" comprises the following meaning: the second candidate size is linearly related to the second number value.

As one embodiment, the technical feature "the first number value is used for determining a first candidate size" comprises the following meaning: the first number value is used for determining the number of bits comprised in at least one field comprised in a DCI format corresponding to the first candidate size; the technical feature "the second number value is used for determining a second candidate size" comprises the following meaning: the second number value is used for determining the number of bits comprised in at least one field comprised in a DCI format corresponding to the second candidate size.

As one embodiment, the technical feature "the first number value is used for determining a first candidate size" comprises the following meaning: the first number value is used for determining at least one of the number of bits comprised in at least one field comprised in the DCI format corresponding to the first candidate size or the number of fields of the same type comprised in the DCI format corresponding to the first candidate size; the technical feature "the second number value is used for determining a second candidate size" comprises the following meaning: the second number value is used for determining at least one of the number of bits comprised in at least one field comprised in the DCI format corresponding to the second candidate size or the number of fields of the same type comprised in the DCI format corresponding to the second candidate size.

As one embodiment, the technical feature "the first number value is used for determining a first candidate size" comprises the following meaning: the number of bits comprised in at least one field comprised in the DCI format corresponding to the first candidate size is linearly related to the ceiling value of the logarithmic value of the first number value with a base of 2; the technical feature "the second number value is used for determining a second candidate size" comprises the following meaning: the number of bits comprised in at least one field comprised in the DCI format corresponding to the second candidate size is linearly related to the ceiling value of the logarithmic value of the second number value with a base of 2.

As one embodiment, the technical feature "the first number value is used for determining a first candidate size" comprises the following meaning: the number of fields comprised in the DCI format corresponding to the first candidate size is linearly related to the first number value; the technical feature "the second number value is used for determining a second candidate size" comprises the following meaning: the number of fields comprised in the DCI format corresponding to the second candidate size is linearly related to the second number value.

As one embodiment, the technical feature "the first number value is used for determining a first candidate size" comprises the following meaning: the number of fields of the same type comprised in the DCI format corresponding to the first candidate size is linearly related to the first number value; the technical feature "the second number value is used for determining a second candidate size" comprises the following meaning: the number of fields of the same type comprised in the DCI format corresponding to the second candidate size is linearly related to the second number value; the same type refers to one or more combinations of a NDI, an HARQ process number, an RV, an MCS, frequency domain resource allocation, time domain resource allocation, a PUCCH resource indication, a PDSCH to HARQ feedback timing indication, an antenna port, and a TCI.

As one embodiment, the technical feature "the first number value is used for determining a first candidate size" comprises the following meanings: the number of bits comprised in at least one field comprised in the DCI format corresponding to the first candidate size is linearly related to the ceiling value of the logarithmic value of the first number value with a base of 2, and the number of fields comprised in the DCI format corresponding to the first candidate size is linearly related to the first number value; the technical feature "the second number value is used for determining a second candidate size" comprises the following meanings: the number of bits comprised in at least one field comprised in the DCI format corresponding to the second candidate size is linearly related to the ceiling value of the logarithmic value of the second number value with a base of 2, and the number of fields comprised in the DCI format corresponding to the second candidate size is linearly related to the second number value.

As one embodiment, a size of the feature DCI format is equal to a payload size of the feature DCI format.

As one embodiment, the size of the feature DCI format is equal to the number of bits comprised in the feature DCI format.

As one embodiment, the size of the feature DCI format is equal to the number of payload bits comprised in the feature DCI format.

As one embodiment, the size of the feature DCI format is equal to the total number of payload bits and CRC bits comprised in the feature DCI format.

As one embodiment, the size of the feature DCI format is equal to the number of information bits comprised in the feature DCI format.

As one embodiment, the size of the feature DCI format is equal to the total number of information bits and CRC bits comprised in the feature DCI format.

As one embodiment, the size of the feature DCI format is equal to the size of the feature DCI format without size alignment.

As one embodiment, the size of the feature DCI format is equal to the size of the feature DCI format after size alignment.

As one embodiment, the size of the feature DCI format is equal to the size of the feature DCI format before size alignment of uplink and downlink scheduling DCI formats.

As one embodiment, the size of the feature DCI format is equal to the size of the feature DCI format without padding.

As one embodiment, the size of the feature DCI format is equal to the size of the feature DCI format after size alignment of uplink and downlink scheduling DCI formats.

As one embodiment, the size of the feature DCI format is equal to the size of the feature DCI format after padding.

As one embodiment, the size of the feature DCI format is the size assumed when monitoring PDCCH candidates for the feature DCI format.

As one embodiment, the size of the feature DCI format is the size assumed when decoding PDCCHs assumed to carry the feature DCI format.

As one embodiment, when the first candidate size is greater than the second candidate size, the size of the feature DCI format is equal to the first candidate size; when the first candidate size is less than the second candidate size, the size of the feature DCI format is equal to the second candidate size; when the first candidate size is equal to the second candidate size, the size of the feature DCI format is equal to the first candidate size or the second candidate size.

As one embodiment, when the first candidate size is greater than the second candidate size, the DCI format corresponding to the second candidate size makes its own size equal to the first candidate size through size alignment; when the first candidate size is less than the second candidate size, the DCI format corresponding to the first candidate size makes its own size equal to the second candidate size through size alignment.

As one embodiment, when the first candidate size is greater than the second candidate size, the DCI format corresponding to the second candidate size makes its own size equal to the first candidate size through size alignment, and the DCI format corresponding to the first candidate size remains unchanged; when the first candidate size is less than the second candidate size, the DCI format corresponding to the first candidate size makes its own size equal to the second candidate size through size alignment, and the DCI format corresponding to the second candidate size remains unchanged; when the first candidate size is equal to the second candidate size, the DCI format corresponding to the first candidate size remains unchanged, and the DCI format corresponding to the second candidate size remains unchanged.

As one embodiment, when the first candidate size is greater than the second candidate size, the DCI format corresponding to the second candidate size makes its own size equal to the first candidate size by padding bits; when the first candidate size is less than the second candidate size, the DCI format corresponding to the first candidate size makes its own size equal to the second candidate size by padding bits.

## Embodiment 10

Embodiment 10 illustrates a schematic diagram of a first parameter and a second parameter according to one embodiment of the present application, as shown in FIG. 10. In FIG. 10, each arc-shaped top area in the upper half represents one cell that may be used for downlinks, and each arc-shaped top area in the lower half represents one cell that may be used for uplinks. The cells represented by the arc-shaped top areas with the same padding may be scheduled simultaneously by one PDCCH. The first parameter is for downlink cells scheduled simultaneously by one PDCCH, and the second parameter is for uplink cells scheduled simultaneously by one PDCCH.

In Embodiment 10, the second information block in the present application is used for indicating a capability parameter set of a sender of the second information block, and the capability parameter set of the sender of the second information block comprises at least a first parameter and a second parameter; the first parameter is used for indicating the number of downlink cells supported by the sender of the second information block that are scheduled simultaneously by one PDCCH, and the second parameter is used for indicating the number of uplink cells supported by the sender of the second information block that are scheduled simultaneously by one PDCCH.

As one embodiment, the first parameter and the second parameter support independent uplink multi-cell simultaneous scheduling indications and downlink multi-cell simultaneous scheduling indications, taking into account the asymmetric uplink/downlink capabilities of user equipment, which improves the flexibility of scheduling while reducing the complexity of implementation.

As one embodiment, the technical feature "the second information block is used for indicating a capability parameter set of a sender of the second information block" comprises the following meaning: the second information block is used by the first node device in the present application for indicating the capability parameter set of the first node device.

As an embodiment, the technical feature "the second information block is used for indicating a capability parameter set of a sender of the second information block" comprises the following meaning: all or part comprised in the second information block are/is used for explicitly or implicitly indicating the capability parameter set of the sender of the second information block.

As one embodiment, the second information block comprises an IE "Phy-ParametersFRX-Diff", or the second information block comprises an IE "UE-NR-Capability".

As one embodiment, the second information block comprises a field "pdcch-MonitoringCA", or the second information block comprises a field "pdcch-BlindDetectionCA", or the second information block comprises a field "CA-ParametersNR", or the second information block comprises a field "searchSpaceSharingCA-DL", or the second information block comprises a field "searchSpaceSharingCA-UL", or the second information block comprises a field "SingleDCIMultipleCell-DL", or the second information block comprises a field "SingleDCIMultipleCel-UL", or the second information block comprises a field "SingleDCIMultipleCellsearchSpaceSharingCA-DL", or the second information block comprises a field "SingleDCIMultipleCellsearchSpaceSharingCA-UL", or the second information block comprises a field "Phy-Parameters".

As one embodiment, the capability parameter set of the sender of the second information block comprises only the first parameter and the second parameter.

As one embodiment, the capability parameter set of the sender of the second information block also comprises parameters other than the first parameter and the second parameter.

As one embodiment, the capability parameter set of the sender of the second information block comprises parameters in the IE "Phy-ParametersFRX-Diff".

As one embodiment, the capability parameter set of the sender of the second information block comprises parameters in the field "pdcch-MonitoringCA".

As one embodiment, the capability parameter set of the sender of the second information block comprises parameters in the field "pdcch-BlindDetectionCA".

As one embodiment, the capability parameter set of the sender of the second information block comprises parameters in the field "CA-ParametersNR".

As one embodiment, the capability parameter set of the sender of the second information block comprises parameters in the field "Phy-Parameters".

As one embodiment, the first parameter and the second parameter are not the same.

As one embodiment, the first parameter and the second parameter are for downlinks and uplinks respectively.

As one embodiment, the first parameter is configured per band, and the second parameter is configured per band.

As an embodiment, the first parameter is configured per CC, and the second parameter is configured per CC.

As one embodiment, the first parameter is configured per band combination, and the second parameter is configured per band combination.

As one embodiment, the first parameter is configured per feature set, and the second parameter is configured per feature set.

As one embodiment, the first parameter is a Boolean parameter, or the first parameter is an integer, or the first parameter is a cell list, or the first parameter is an enumerated parameter, or the first parameter is a choice parameter, or the first parameter is a sequence parameter.

As one embodiment, the second parameter is a Boolean parameter, or the second parameter is an integer, or the second parameter is a cell list, or the second parameter is an enumerated parameter, or the second parameter is a choice parameter, or the second parameter is a sequence parameter.

As one embodiment, the sender of the second information block is the first node device in the present application.

As one embodiment, the number of downlink cells supported by the sender of the second information block that are scheduled simultaneously by one PDCCH may be equal to 1 or greater than 1.

As one embodiment, the number of uplink cells supported by the sender of the second information block that are scheduled simultaneously by one PDCCH may be equal to 1 or greater than 1.

As one embodiment, the number of downlink cells supported by the sender of the second information block that are scheduled simultaneously by one PDCCH is equal to or less than the number of PDSCHs supported by the sender of the second information block that are scheduled simultaneously by one PDCCH.

As one embodiment, the number of downlink cells supported by the sender of the second information block that are scheduled simultaneously by one PDCCH is not greater than the number of downlink TBs supported by the sender of the second information block that are scheduled simultaneously by one PDCCH.

As one embodiment, the number of uplink cells supported by the sender of the second information block that are scheduled simultaneously by one PDCCH is equal to or less than the number of PUSCHs supported by the sender of the second information block that are scheduled simultaneously by one PDCCH.

As one embodiment, the number of uplink cells supported by the sender of the second information block that are scheduled simultaneously by one PDCCH is not greater than the number of uplink TBs supported by the sender of the second information block that are scheduled simultaneously by one PDCCH.

As one embodiment, the downlink cells scheduled simultaneously by one PDCCH are cells scheduled simultaneously by the same downlink grant (DL grant) or downlink assignment (DL assignment).

As one embodiment, the downlink cells scheduled simultaneously by one PDCCH are downlink cells that can be scheduled simultaneously by the same PDCCH at most.

As one embodiment, the downlink cells scheduled simultaneously by one PDCCH are cells to which all downlink channels or signals that are scheduled simultaneously by the same PDCCH belong respectively.

As one embodiment, the downlink cells scheduled simultaneously by one PDCCH are cells to which all downlink channels or signals that are scheduled simultaneously by the same PDCCH candidate belong respectively.

As one embodiment, the downlink cells scheduled simultaneously by one PDCCH are downlink cells scheduled by the same DCI format.

As one embodiment, the downlink cells scheduled simultaneously by one PDCCH are cells to which all PDSCHs that are scheduled simultaneously by the same PDCCH belong respectively.

As one embodiment, the downlink cells scheduled simultaneously by one PDCCH are cells to which all PDSCHs that are scheduled simultaneously by the same DCI format belong respectively.

As one embodiment, the uplink cells scheduled simultaneously by one PDCCH are cells scheduled simultaneously by the same uplink grant (UL grant) or uplink assignment (UL assignment).

As one embodiment, the uplink cells scheduled simultaneously by one PDCCH are uplink cells that can be scheduled simultaneously by the same PDCCH at most.

As one embodiment, the uplink cells scheduled simultaneously by one PDCCH are cells to which all uplink channels or signals that are scheduled simultaneously by the same PDCCH belong respectively.

As one embodiment, the uplink cells scheduled simultaneously by one PDCCH are cells to which all uplink channels or signals that are scheduled simultaneously by a DCI format carried by the same PDCCH candidate belong respectively.

As one embodiment, the uplink cells scheduled simultaneously by one PDCCH are cells to which all uplink channels or signals that are scheduled simultaneously by the same DCI format belong respectively.

As one embodiment, the uplink cells scheduled simultaneously by one PDCCH are cells to which all PUSCHs that are scheduled simultaneously by the same DCI format belong respectively.

As one embodiment, the uplink cells scheduled simultaneously by one PDCCH are cells to which all PUSCHs that are scheduled simultaneously by the same PDCCH belong respectively.

As one embodiment, the technical feature "the first parameter is used for indicating the number of downlink cells supported by the sender of the second information block that are scheduled simultaneously by one PDCCH" comprises the following meaning: the first parameter is used by the first node device in the present application for indicating the number of downlink cells supported by the sender of the second information block that are scheduled simultaneously by one PDCCH.

As one embodiment, the technical feature "the first parameter is used for indicating the number of downlink cells supported by the sender of the second information block that are scheduled simultaneously by one PDCCH" comprises the following meaning: the first parameter is used for explicitly or implicitly indicating the number of downlink cells supported by the sender of the second information block that are scheduled simultaneously by one PDCCH.

As one embodiment, the technical feature "the first parameter is used for indicating the number of downlink cells supported by the sender of the second information block that are scheduled simultaneously by one PDCCH" comprises the following meaning: the first parameter is used for indicating whether the sender of the second information block supports one PDCCH to simultaneously schedule a plurality of downlink cells.

As one embodiment, the technical feature "the first parameter is used for indicating the number of downlink cells supported by the sender of the second information block that are scheduled simultaneously by one PDCCH" comprises the following meaning: the first parameter is used for indicating the maximum number of downlink cells supported by the sender of the second information block that are scheduled simultaneously by one PDCCH.

As one embodiment, the technical feature "the first parameter is used for indicating the number of downlink cells supported by the sender of the second information block that are scheduled simultaneously by one PDCCH" comprises the following meaning: the second parameter is used for indicating whether the sender of the second information block supports one PDCCH to simultaneously schedule a plurality of downlink cells and for indicating the maximum number of downlink cells supported by the sender of the second information block that are scheduled simultaneously by one PDCCH when the sender of the second information block supports one PDCCH to simultaneously schedule a plurality of uplink cells.

As one embodiment, the technical feature "the first parameter is used for indicating the number of downlink cells supported by the sender of the second information block that are scheduled simultaneously by one PDCCH" comprises the following meanings: the first parameter is used for indicating whether the sender of the second information block supports one PDCCH to simultaneously schedule a plurality of downlink cells; when the first parameter indicates that the sender of the second information block supports one PDCCH to simultaneously schedule a plurality of downlink cells, one parameter other than the first parameter or the second parameter comprised in a capability parameter set of the sender of the second information block is used for indicating the maximum number of downlink cells supported by the sender of the second information block that are scheduled simultaneously by one PDCCH.

As one embodiment, the technical feature "the first parameter is used for indicating the number of downlink cells supported by the sender of the second information block that are scheduled simultaneously by one PDCCH" comprises the following meanings: the first parameter is used for indicating whether the sender of the second information block supports one PDCCH to simultaneously schedule a plurality of downlink cells; when the first parameter indicates that the sender of the second information block supports one PDCCH to simultaneously schedule a plurality of downlink cells, one parameter other than the first parameter or the second parameter comprised in the capability parameter set of the sender of the second information block is used for indicating the maximum number of carriers of downlink CA supported by the sender of the second information block, and the maximum number of downlink cells supported by the sender of the second information block that are scheduled simultaneously by one PDCCH is equal to the maximum number of carriers of downlink CA supported by the sender of the second information block.

As one embodiment, the two expressions "the number of downlink cells supported by the sender of the second information block that are scheduled simultaneously by one PDCCH is equal to 1" and "the sender of the second information block only supports one PDCCH that can only schedule a single downlink cell" are equivalent or may be used interchangeably.

As one embodiment, the two expressions "the number of downlink cells supported by the sender of the second information block that are scheduled simultaneously by one PDCCH is greater than 1" and "the sender of the second information block supports one PDCCH to simultaneously schedule a plurality of downlink cells" are equivalent or may be used interchangeably.

As one embodiment, when the sender of the second information block supports one PDCCH to simultaneously schedule a plurality of downlink cells, the sender of the second information block definitely supports one PDCCH to schedule one downlink cell.

As one embodiment, the technical feature "the first parameter is used for indicating the number of downlink cells supported by the sender of the second information block that are scheduled simultaneously by one PDCCH" comprises the following meaning: the first parameter is used for indicating the number of downlink cells supported by the sender of the second information block per band that are scheduled simultaneously by one PDCCH.

As one embodiment, the technical feature "the first parameter is used for indicating the number of downlink cells supported by the sender of the second information block that are scheduled simultaneously by one PDCCH" comprises the following meaning: the first parameter is used for indicating the number of downlink cells supported by the cross band combination of the sender of the second information block that are scheduled simultaneously by one PDCCH.

As one embodiment, the technical feature "the second parameter is used for indicating the number of uplink cells supported by the sender of the second information block that are scheduled simultaneously by one PDCCH" comprises the following meaning: the second parameter is used by the first node device in the present application for indicating the number of uplink cells supported by the sender of the second information block that are scheduled simultaneously by one PDCCH.

As one embodiment, the technical feature "the second parameter is used for indicating the number of uplink cells supported by the sender of the second information block that are scheduled simultaneously by one PDCCH" comprises the following meaning: the second parameter is used for explicitly or implicitly indicating the number of uplink cells supported by the sender of the second information block that are scheduled simultaneously by one PDCCH.

As one embodiment, the technical feature "the second parameter is used for indicating the number of uplink cells supported by the sender of the second information block that are scheduled simultaneously by one PDCCH" comprises the following meaning: the second parameter is used for indicating whether the sender of the second information block supports one PDCCH to simultaneously schedule a plurality of uplink cells.

As one embodiment, the technical feature "the second parameter is used for indicating the number of uplink cells supported by the sender of the second information block that are scheduled simultaneously by one PDCCH" comprises the following meaning: the second parameter is used for indicating the maximum number of uplink cells supported by the sender of the second information block that are scheduled simultaneously by one PDCCH.

As one embodiment, the technical feature "the second parameter is used for indicating the number of uplink cells supported by the sender of the second information block that are scheduled simultaneously by one PDCCH" comprises the following meaning: the second parameter is used for indicating whether the sender of the second information block supports one PDCCH to simultaneously schedule a plurality of uplink cells and for indicating the maximum number of uplink cells supported by the sender of the second information block that are scheduled simultaneously by one PDCCH when the sender of the second information block supports one PDCCH to simultaneously schedule a plurality of uplink cells.

As one embodiment, the technical feature "the second parameter is used for indicating the number of uplink cells supported by the sender of the second information block that are scheduled simultaneously by one PDCCH" comprises the following meanings: the second parameter is used for indicating whether the sender of the second information block supports one PDCCH to simultaneously schedule a plurality of uplink cells; when the sender of the second information block supports one PDCCH to simultaneously schedule a plurality of uplink cells, one parameter other than the first parameter or the second parameter comprised in a capability parameter set of the sender of the second information block is used for indicating the maximum number of uplink cells supported by the sender of the second information block that are scheduled simultaneously by one PDCCH.

As one embodiment, the technical feature "the second parameter is used for indicating the number of uplink cells supported by the sender of the second information block that are scheduled simultaneously by one PDCCH" comprises the following meanings: the second parameter is used for indicating whether the sender of the second information block supports one PDCCH to simultaneously schedule a plurality of uplink cells; when the sender of the second information block supports one PDCCH to simultaneously schedule a plurality of uplink cells, one parameter other than the first parameter or the second parameter comprised in the capability parameter set of the sender of the second information block is used for indicating the maximum number of carriers of uplink CA supported by the sender of the second information block, and the maximum number of uplink cells supported by the sender of the second information block that are scheduled simultaneously by one PDCCH is equal to the maximum number of carriers of uplink CA supported by the sender of the second information block.

As one embodiment, the two expressions "the number of uplink cells supported by the sender of the second information block that are scheduled simultaneously by one PDCCH is equal to 1" and "the sender of the second information block only supports one PDCCH that can only schedule a single uplink cell" are equivalent or may be used interchangeably.

As one embodiment, the two expressions "the number of uplink cells supported by the sender of the second information block that are scheduled simultaneously by one PDCCH is greater than 1" and "the sender of the second information block supports one PDCCH to simultaneously schedule a plurality of uplink cells" are equivalent or may be used interchangeably.

As one embodiment, when the sender of the second information block supports one PDCCH to simultaneously schedule a plurality of uplink cells, the sender of the second information block definitely supports one PDCCH to schedule one uplink cell.

As one embodiment, the technical feature "the second parameter is used for indicating the number of uplink cells supported by the sender of the second information block that are scheduled simultaneously by one PDCCH" comprises the following meaning: the second parameter is used for indicating the number of uplink cells supported by the sender of the second information block per band that are scheduled simultaneously by one PDCCH.

As one embodiment, the technical feature "the second parameter is used for indicating the number of uplink cells supported by the sender of the second information block that are scheduled simultaneously by one PDCCH" comprises the following meaning: the second parameter is used for indicating the number of uplink cells supported by the sender of the second information block per band combination that are scheduled simultaneously by one PDCCH.

As one embodiment, the number of cells comprised in the first cell set is not greater than a value of the first parameter.

As one embodiment, the number of cells comprised in any one of the W1 cell sets in the present application is not greater than the value of the first parameter.

As one embodiment, the number of cells comprised in any one of the W2 cell sets in the present application is not greater than the value of the second parameter.

As one embodiment, the number of cells comprised in the first cell set is not greater than the value of the first parameter.

As one embodiment, the total number of cells comprised in all cell sets in the W1 cell sets in the present application is not greater than the value of the first parameter.

As one embodiment, the total number of cells comprised in all cell sets in the W2 cell sets in the present application is not greater than the value of the second parameter.

## Embodiment 11

Embodiment 11 illustrates a schematic diagram of a relationship between a first PDCCH candidate and a second PDCCH candidate according to one embodiment of the present application, as shown in FIG. 11. In FIG. 11, each padded rectangle represents one PDCCH candidate in a first search space, a rectangle padded with oblique lines represents a first PDCCH candidate, and a rectangle padded with cross lines represents a second PDCCH candidate, and the second PDCCH candidate can receive a PDCCH carrying a first DCI format.

In Embodiment 11, the plurality of PDCCH candidates in the present application comprise a first PDCCH candidate and a second PDCCH candidate, the first PDCCH candidate is for a first DCI format, the second PDCCH candidate is for a second DCI format, and a size of the first DCI format is equal to a size of the second DCI format; the first DCI format is used for scheduling one cell set; the second DCI format is used for scheduling another cell set; an aggregation level of the first PDCCH candidate is equal to an aggregation level of the second PDCCH candidate, and an index of a control resource set to which the first PDCCH candidate belongs is equal to an index of a control resource set to which the second PDCCH candidate belongs; the first node device in the present application can receive a PDCCH carrying the first DCI format on the second PDCCH candidate.

As one embodiment, search space sharing between cell sets scheduled simultaneously is supported to further reduce blocking probability and complexity.

As one embodiment, the plurality of PDCCH candidates comprise only the first PDCCH candidate and the second PDCCH candidate.

As one embodiment, the plurality of PDCCH candidates comprise PDCCH candidates other than the first PDCCH candidate and the second PDCCH candidate.

As one embodiment, the first PDCCH candidate and the second PDCCH candidate are two different PDCCH candidates.

As one embodiment, the first PDCCH candidate is associated with or corresponds to one of the W1 cell sets in the present application, the second PDCCH candidate is associated with another of the W1 cell sets in the present application, or the second PDCCH candidate is associated with or corresponds to one of the W2 cell sets in the present application.

As one embodiment, indexes of the first PDCCH candidate and the second PDCCH candidate are not equal.

As one embodiment, indexes of the first PDCCH candidate and the second PDCCH candidate are equal, and a search space set to which the first PDCCH candidate belongs is different from a search space set to which the second PDCCH candidate belongs.

As one embodiment, indexes of the first PDCCH candidate and the second PDCCH candidate are equal, and a servicing cell or cell set for the first PDCCH candidate is different from a servicing cell or cell set for the second PDCCH candidate.

As one embodiment, identifiers of the first PDCCH candidate and the second PDCCH candidate are different.

As one embodiment, an index or identifier of the first PDCCH candidate in a search space set to which it belongs is different from an index or identifier of the second PDCCH candidate in a search space set to which it belongs.

As one embodiment, the first PDCCH candidate and the second PDCCH candidate belong to the same search space set.

As one embodiment, the first PDCCH candidate and the second PDCCH candidate belong to two different search space sets, respectively.

As one embodiment, CCEs occupied by the first PDCCH candidate and CCEs occupied by the second PDCCH candidate completely overlap in a time-frequency domain.

As one embodiment, at least one CCE occupied by the first PDCCH candidate is not occupied by the second PDCCH candidate.

As one embodiment, a CCE set occupied by the first PDCCH candidate and a CCE set occupied by the second PDCCH candidate are orthogonal in the time-frequency domain.

As one embodiment, the CCE set occupied by the first PDCCH candidate and the CCE set occupied by the second PDCCH candidate are different in the time-frequency domain.

As an embodiment, there is at least one CCE simultaneously occupied by the first PDCCH candidate and the second PDCCH candidate in the time-frequency domain.

As one embodiment, the first PDCCH candidate is only used for carrying the first DCI format.

As one embodiment, the first PDCCH candidate is also used for carrying a DCI format other than the first DCI format.

As one embodiment, the second PDCCH candidate is only used for carrying the second DCI format.

As one embodiment, the second PDCCH candidate is also used for carrying a DCI format other than the second DCI format.

As one embodiment, the feature DCI format and one of the first DCI format or the second DCI format are the same DCI format.

As one embodiment, the first DCI format (Format) is a format 0_K, or the first DCI format is a format 1_K, wherein K is a positive integer greater than 2. As one auxiliary embodiment of the above embodiment, K is equal to 3, or K is equal to 4, or K is equal to 5.

As one embodiment, the second DCI format is a format 0_K, or the second DCI format is a format 1_K, wherein K is a positive integer greater than 2. As one auxiliary embodiment of the above embodiment, K is equal to 3, or K is equal to 4, or K is equal to 5.

As one embodiment, the first DCI format and the second DCI format are the same format.

As one embodiment, the first DCI format and the second DCI format are different formats.

As one embodiment, the first DCI format and the second DCI format are the same format, and a value of one field in the first DCI format is not equal to a value of one field in the second DCI format.

As one embodiment, the first DCI format and the second DCI format are the same DCI format, and parameter values indicated by the same type of fields in the first DCI format and the second DCI format are not equal.

As one embodiment, the first DCI format is a DCI format supported by a user equipment-specific search space set, and the second DCI format is a DCI format supported by a user equipment-specific search space set.

As one embodiment, the first DCI format is a DCI format that may simultaneously schedule PDSCHs respectively on a plurality of servicing cells.

As one embodiment, the second DCI format is a DCI format that may simultaneously schedule PDSCHs respectively on a plurality of servicing cells.

As one embodiment, the first DCI format is a DCI format that may simultaneously schedule PUSCHs respectively on a plurality of servicing cells.

As one embodiment, the second DCI format is a DCI format that may simultaneously schedule PUSCHs on a plurality of servicing cells.

As one embodiment, the technical feature "the first PDCCH candidate is for a first DCI format" comprises the following meaning: the first PDCCH candidate is assumed to carry at least the first DCI format; the technical feature "the second PDCCH candidate for a second DCI format" comprises the following meaning: the second PDCCH candidate is assumed to carry at least the second DCI format.

As one embodiment, the technical feature "the first PDCCH candidate is for a first DCI format" comprises the following meaning: the first PDCCH candidate is monitored at least for the first DCI format; the technical feature "the second PDCCH candidate is for a second DCI format" comprises the following meaning: the second PDCCH candidate is monitored at least for the second DCI format.

As one embodiment, the technical feature "the first PDCCH candidate is for a first DCI format" comprises the following meaning: a PDCCH carrying the first DCI format is assumed to occupy the first PDCCH candidate; the technical feature "the second PDCCH candidate is for a second DCI format" comprises the following meaning: a PDCCH carrying the second DCI format is assumed to occupy the second PDCCH candidate.

As one embodiment, a cell set for which the first DCI format is used for scheduling is one subset of the first cell set, and another cell set for which the second DCI format is used for scheduling is another subset of the first cell set.

As one embodiment, a cell set for which the first DCI format is used for scheduling comprises a plurality of cells, and another cell set for which the second DCI format is used for scheduling comprises a plurality of cells.

As one embodiment, a cell set for which the first DCI format is used for scheduling comprises only one cell, and another cell set for which the second DCI format is used for scheduling comprises a plurality of cells.

As one embodiment, a cell set for which the first DCI format is used for scheduling comprises a plurality of cells, and another cell set for which the second DCI format is used for scheduling comprises only one cell.

As one embodiment, at least one of a cell set for which the first DCI format is used for scheduling or another cell set for which the second DCI format is used for scheduling comprises a plurality of cells.

As one embodiment, a cell set for which the first DCI format is used for scheduling is one of the W1 cell sets in the present application, and another cell set for which the second DCI format is used for scheduling is another of the W1 cell sets in the present application.

As one embodiment, a cell set for which the first DCI format is used for scheduling is one of the W1 cell sets in the present application, and another cell set for which the second DCI format is used for scheduling is one of the W2 cell sets in the present application.

As one embodiment, the first DCI format is used for simultaneously scheduling all servicing cells comprised in a cell set for which the first DCI format is used for scheduling, and the second DCI format is used for simultaneously scheduling all servicing cells comprised in another cell set for which the second DCI format is used for scheduling.

As one embodiment, the first DCI format is used for simultaneously scheduling all PDSCHs or all PUSCHs on all servicing cells comprised in a cell set for which the first DCI format is used for scheduling, and the second DCI format is used for simultaneously scheduling all PDSCHs or all PUSCHs on all servicing cells comprised in another cell set for which the second DCI format is used for scheduling.

As one embodiment, the number of CCEs occupied by the first PDCCH candidate is equal to the number of CCEs occupied by the second PDCCH candidate.

As one embodiment, a control resource set to which the first PDCCH candidate belongs is a control resource set (CORESET) associated or configured with a search space set to which the first PDCCH candidate belongs; the control resource set to which the second PDCCH candidate belongs is a control resource set associated or configured with the search space set to which the second PDCCH candidate belongs.

As one embodiment, the control resource set to which the first PDCCH candidate belongs is a control resource set to which a CCE occupied by the first PDCCH candidate belongs; the control resource set to which the second PDCCH candidate belongs is a control resource set to which a CCE occupied by the second PDCCH candidate belongs.

As one embodiment, the control resource set to which the first PDCCH candidate belongs is a control resource set indicated by a field in a configuration IE of a search space set to which the first PDCCH candidate belongs; the control resource set to which the second PDCCH candidate belongs is a control resource set indicated by a field in a configuration IE of a search space set to which the second PDCCH candidate belongs.

As one embodiment, the two expressions "an index of a control resource set to which the first PDCCH candidate belongs" and "an identifier of a control resource set to which the first PDCCH candidate belongs" are equivalent or may be used interchangeably.

As one embodiment, the two expressions "an index of a control resource set to which the second PDCCH candidate belongs" and "an identifier of a control resource set to which the second PDCCH candidate belongs" are equivalent or may be used interchangeably.

As one embodiment, the two expressions "an index of a control resource set to which the first PDCCH candidate belongs" and "an ID of a control resource set to which the first PDCCH candidate belongs" are equivalent or may be used interchangeably.

As one embodiment, the two expressions "an index of a control resource set to which the second PDCCH candidate belongs" and "an ID of a control resource set to which the second PDCCH candidate belongs" are equivalent or may be used interchangeably.

As one embodiment, an index of a control resource set to which the first PDCCH candidate belongs is equal to a configured value or a default value; an index of a control resource set to which the second PDCCH candidate belongs is equal to a configured value or a default value.

As one embodiment, the index of the control resource set to which the first PDCCH candidate belongs is equal to one of 0, 1, 2, and 3; the index of the control resource set to which the second PDCCH candidate belongs is equal to one of 0, 1, 2, and 3.

As one embodiment, the index of the control resource set to which the first PDCCH candidate belongs is equal to one integer value from 0 to 7; the index of the control resource set to which the second PDCCH candidate belongs is equal to one integer value from 0 to 7.

As one embodiment, the two expressions "an index of a control resource set to which the first PDCCH candidate belongs is equal to an index of a control resource set to which the second PDCCH candidate belongs" and "a control resource set to which the first PDCCH candidate belongs is the same as a control resource set to which the second PDCCH candidate belongs" are equivalent or may be used interchangeably.

As one embodiment, the first PDCCH candidate corresponds to or is associated with a value of one field in the first DCI format, and the second PDCCH candidate corresponds to or is associated with a value of one field in the second DCI format.

As one embodiment, the first PDCCH candidate is one PDCCH candidate comprised in a search space (or a PDCCH candidate subset) determined by, corresponding to or associated with a value of one field in the first DCI format, and the second PDCCH candidate is one PDCCH candidate comprised in a search space (or a PDCCH candidate subset) determined by, corresponding to or associated with a value of one field in the second DCI format.

As one embodiment, the technical feature "the first node device can receive a PDCCH carrying the first DCI format on the second PDCCH candidate" comprises the following meaning: the first node device assumes that the second PDCCH candidate may carry the first DCI format.

As one embodiment, the technical feature "the first node device can receive a PDCCH carrying the first DCI format on the second PDCCH candidate" comprises the following meaning: the second PDCCH candidate may carry the first DCI format or the second DCI format.

As one embodiment, the technical feature "the first node device can receive a PDCCH carrying the first DCI format on the second PDCCH candidate" comprises the following meaning: the second PDCCH candidate may carry a payload using the first DCI format or a PDCCH generated by a payload using the second DCI format.

As one embodiment, the technical feature "the first node device can receive a PDCCH carrying the first DCI format on the second PDCCH candidate" comprises the following meaning: the first node device decodes a PDCCH on the second PDCCH candidate using a size of the second DCI format, and information bits obtained by successfully decoding may use the first DCI format or the second DCI format.

As one embodiment, the technical feature "the first node device can receive a PDCCH carrying the first DCI format on the second PDCCH candidate" comprises the following meanings: the first node device decodes a PDCCH on the second PDCCH candidate using a size of the second DCI format, and a field carried by a successfully decoded PDCCH may be defined according to the first DCI format or may be defined according to the second DCI format.

As one embodiment, the technical feature "the first node device can receive a PDCCH carrying the first DCI format on the second PDCCH candidate" comprises the following meanings: a first value is equal to an indication value (or an index or an identifier) configured for, corresponding to or associated with one cell set for which the first DCI format is used for scheduling, and a second value is equal to an indication value (or an index or an identifier) configured for, corresponding to or associated with another cell set for which the second DCI format is used for scheduling; the first node device can receive a PDCCH carrying the first DCI format indicating the first value on the second PDCCH candidate.

As one embodiment, the technical feature "the first node device can receive a PDCCH carrying the first DCI format on the second PDCCH candidate" comprises the following meaning: the first node device can receive a PDCCH used for scheduling of another cell set on the second PDCCH candidate used for scheduling of one cell set.

As one embodiment, the technical feature "the first node device can receive a PDCCH carrying the first DCI format on the second PDCCH candidate" comprises the following meaning: the first node device can receive a PDCCH used for scheduling of another cell set on the second PDCCH candidate corresponding to or associated with one cell set.

As one embodiment, the technical feature "the first node device can receive a PDCCH carrying the first DCI format on the second PDCCH candidate" comprises the following meanings: a search space corresponding to or associated with one cell set (or a PDCCH candidate set corresponding to or associated with one cell set) for which the first DCI format is used for scheduling and a search space corresponding to or associated with another cell set (or a PDCCH candidate set corresponding to or associated with one cell set) for which the second DCI format is used for scheduling are shared.

As one embodiment, the technical feature "the first node device can receive a PDCCH carrying the first DCI format on the second PDCCH candidate" comprises the following meanings: the first node device monitors the second PDCCH candidate using a size of the second DCI format, and the first node device may interpret PDCCHs detected on the second PDCCH candidate according to the definition of fields comprised in the first DCI format.

As one embodiment, the technical feature "the first node device can receive a PDCCH carrying the first DCI format on the second PDCCH candidate" comprises the following meaning: the second node device in the present application may send a PDCCH using the first DCI format on the second PDCCH candidate.

As one embodiment, the technical feature "the first node device can receive a PDCCH carrying the first DCI format on the second PDCCH candidate" comprises the following meaning: the first node device determines whether PDCCHs received (or detected) on the second PDCCH candidate carry the first DCI format or the second DCI format by reading information bits comprised in PDCCHs received (or detected) on the second PDCCH candidate.

As one embodiment, without affecting the number of monitoring times (or monitoring capability or blind detection complexity) of the second PDCCH candidate, the first node device may read a DCI payload using the first DCI format by interpreting fields in the detected (or received) PDCCHs.

As one embodiment, a capability report of the first node device is used for indicating that the first node device supports uplink search space sharing.

As one embodiment, the capability report of the first node device is used for indicating that the first node device supports downlink search space sharing.

As one embodiment, the capability report of the first node device is used for indicating that the first node device supports search space sharing of a PDCCH or DCI format comprising simultaneous scheduling of a plurality of servicing cells.

As one embodiment, the capability report of the first node device is used for indicating that the first node device supports search space sharing of a PDCCH or DCI format comprising simultaneous scheduling of a plurality of downlink servicing cells.

As one embodiment, the capability report of the first node device is used for indicating that the first node device supports search space sharing of a PDCCH or DCI format comprising simultaneous scheduling of a plurality of uplink servicing cells.

As one embodiment, the capability report of the first node device is used for indicating that the first node device supports receiving a PDCCH carrying the first DCI format on the second PDCCH candidate.

As one embodiment, either a search space set to which the first PDCCH candidate belongs or a search space set to which the second PDCCH candidate belongs is a non-associated search space set.

As one embodiment, a capability parameter set of a sender of the second information block in the present application comprises a third parameter and a fourth parameter, the third parameter is used for indicating whether the sender of the second information block supports downlink search space sharing, and the fourth parameter is used for indicating whether the sender of the second information block supports uplink search space sharing.

As one embodiment, a capability parameter set of a sender of the second information block in the present application comprises a third parameter and a fourth parameter, the third parameter is used for indicating whether the sender of the second information block supports search space sharing of a PDCCH or DCI format comprising simultaneous scheduling of a plurality of downlink servicing cells, and the fourth parameter is used for indicating whether the sender of the second information block supports search space sharing of a PDCCH or DCI format comprising simultaneous scheduling of a plurality of uplink servicing cells.

## Embodiment 12

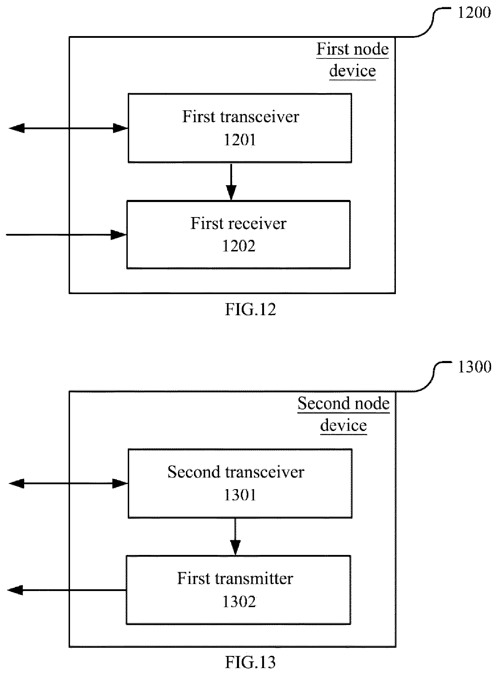

Embodiment 12 illustrates a structural block diagram of a processing apparatus in a first node device according to one embodiment, as shown in FIG. 12. In FIG. 12, a processing apparatus 1200 in the first node device comprises a first transceiver 1201 and a first receiver 1202. The first transceiver 1201 comprises a transmitting device/receiving device 456 (comprising an antenna 460), a receiving processor 452, a transmitting processor 455 and a controller/processor 490 in FIG. 4 of the present application; the first receiver 1202 comprises a transmitting device/receiving device 456 (comprising an antenna 460), a receiving processor 452 and a controller/processor 490 in FIG. 4 of the present application.

In Embodiment 12, the first transceiver 1201 receives a first information block, the first information block is used for determining a first cell set, and the first cell set comprises a plurality of cells; a first receiver 1202 monitors a plurality of PDCCH candidates, wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

As one embodiment, the first transceiver 1201 receives M1 information blocks, the M1 information blocks are used for respectively determining index values of M1 search space sets and the number of PDCCH candidates respectively using the first aggregation level in the M1 search space sets, and M1 is a positive integer greater than 1; any one of the M1 search space sets is a search space set for a cell in the first cell set, and in the M1 search space sets, all search space sets whose index values are equal to the first index value comprise an equal number of PDCCH candidates using the first aggregation level.

As one embodiment, the number of PDCCH candidates using the first aggregation level that are comprised in any one search space set whose index value is equal to the first index value and which is for the first cell set is a feature number value, the feature number value is one of M2 number values, and M2 is a positive integer greater than 1; any one of the M2 number values is the number of PDCCH candidates using the first aggregation level that are comprised in a search space set whose index value is equal to the first index value and which is for at least one cell, and the maximum number value of the M2 number values is used for determining PDCCH candidates using the first aggregation level from the first search space set.

As one embodiment, the first information block is used for determining W1 cell sets and W2 cell sets, any one of the W1 cell sets comprises at least one cell, any one of the W2 cell sets comprises at least one cell, W1 is a positive integer greater than 1, and W2 is a positive integer greater than 1; the first cell set comprises all cells comprised in any one of the W1 cell sets, and the first cell set comprises all cells comprised in any one of the W2 cell sets.

As one embodiment, a first number value is equal to the maximum value of the number of cells respectively comprised in the W1 cell sets, a second number value is equal to the maximum value of the number of cells respectively comprised in the W2 cell sets, the first number value is a positive integer, and the second number value is a positive integer; the first number value is used for determining a first candidate size, the second number value is used for determining a second candidate size, and a size of the feature DCI format is equal to a larger value between the first candidate size and the second candidate size.

As one embodiment, the first transceiver 1201 sends a second information block, wherein the second information block is used for indicating a capability parameter set of a sender of the second information block, and the capability parameter set of the sender of the second information block comprises at least a first parameter and a second parameter; the first parameter is used for indicating the number of downlink cells supported by the sender of the second information block that are scheduled simultaneously by one PDCCH, and the second parameter is used for indicating the number of uplink cells supported by the sender of the second information block that are scheduled simultaneously by one PDCCH.

As one embodiment, the plurality of PDCCH candidates comprise a first PDCCH candidate and a second PDCCH candidate, the first PDCCH candidate is for a first DCI format, the second PDCCH candidate is for a second DCI format, and a size of the first DCI format is equal to a size of the second DCI format; the first DCI format is used for scheduling one cell set; the second DCI format is used for scheduling another cell set; an aggregation level of the first PDCCH candidate is equal to an aggregation level of the second PDCCH candidate, and an index of a control resource set to which the first PDCCH candidate belongs is equal to an index of a control resource set to which the second PDCCH candidate belongs; the first node device can receive a PDCCH carrying the first DCI format on the second PDCCH candidate.

## Embodiment 13

Embodiment 13 illustrates a structural block diagram of a processing apparatus in a second node device according to one embodiment, as shown in FIG. 13. In FIG. 13, a processing apparatus 1300 in the second node device comprises a second transceiver 1301 and a first transmitter 1302. The second transceiver 1301 comprises a transmitting device/receiving device 416 (comprising an antenna 460), a receiving processor 412, a transmitting processor 415 and a controller/processor 440 in FIG. 4 of the present application; the first transmitter 1302 comprises a transmitting device/receiving device 416 (comprising an antenna 460), a transmitting processor 415 and a controller/processor 440 in FIG. 4 of the present application.

In Embodiment 13, the second transceiver 1301 sends a first information block, the first information block is used for determining a first cell set, and the first cell set comprises a plurality of cells; the first transmitter 1302 determines a plurality of PDCCH candidates, wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; the index value is equal to the first index value and all search space sets for the first cell set comprise an equal number of PDCCH candidates using the first aggregation level.

As one embodiment, the second transceiver 1301 sends M1 information blocks, the M1 information blocks are used for respectively determining index values of M1 search space sets and the number of PDCCH candidates respectively using the first aggregation level in the M1 search space sets, and M1 is a positive integer greater than 1; any one of the M1 search space sets is a search space set for a cell in the first cell set, and in the M1 search space sets, all search space sets whose index values are equal to the first index value comprise an equal number of PDCCH candidates using the first aggregation level.

As one embodiment, the number of PDCCH candidates using the first aggregation level that are comprised in any one search space set whose index value is equal to the first index value and which is for the first cell set is a feature number value, the feature number value is one of M2 number values, and M2 is a positive integer greater than 1; any one of the M2 number values is the number of PDCCH candidates using the first aggregation level that are comprised in a search space set whose index value is equal to the first index value and which is for at least one cell, and the maximum number value of the M2 number values is used for determining PDCCH candidates using the first aggregation level from the first search space set.

As one embodiment, the first information block is used for determining W1 cell sets and W2 cell sets, any one of the W1 cell sets comprises at least one cell, any one of the W2 cell sets comprises at least one cell, W1 is a positive integer greater than 1, and W2 is a positive integer greater than 1; the first cell set comprises all cells comprised in any one of the W1 cell sets, and the first cell set comprises all cells comprised in any one of the W2 cell sets.

As one embodiment, a first number value is equal to the maximum value of the number of cells respectively comprised in the W1 cell sets, a second number value is equal to the maximum value of the number of cells respectively comprised in the W2 cell sets, the first number value is a positive integer, and the second number value is a positive integer; the first number value is used for determining a first candidate size, the second number value is used for determining a second candidate size, and a size of the feature DCI format is equal to a larger value between the first candidate size and the second candidate size.

As one embodiment, the second transceiver 1301 receives a second information block, wherein the second information block is used for indicating a capability parameter set of a sender of the second information block, and the capability parameter set of the sender of the second information block comprises at least a first parameter and a second parameter; the first parameter is used for indicating the number of downlink cells supported by the sender of the second information block that are scheduled simultaneously by one PDCCH, and the second parameter is used for indicating the number of uplink cells supported by the sender of the second information block that are scheduled simultaneously by one PDCCH.

As one embodiment, the plurality of PDCCH candidates comprise a first PDCCH candidate and a second PDCCH candidate, the first PDCCH candidate is for a first DCI format, the second PDCCH candidate is for a second DCI format, and a size of the first DCI format is equal to a size of the second DCI format; the first DCI format is used for scheduling one cell set; the second DCI format is used for scheduling another cell set; an aggregation level of the first PDCCH candidate is equal to an aggregation level of the second PDCCH candidate, and an index of a control resource set to which the first PDCCH candidate belongs is equal to an index of a control resource set to which the second PDCCH candidate belongs; a monitor of the plurality of PDCCH candidates can receive a PDCCH carrying the first DCI format on the second PDCCH candidate.

Those of ordinary skill in the art can understand that all or part of the steps in the above methods may be completed by instructing the relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of software function modules. The present application is not limited to any specific form of software and hardware combination. The first node device or the second node device or the UE or the terminal in the present application includes, but is not limited to, mobile phones, tablet computers, laptops, network cards, low-power devices, eMTC devices, NB-IoT devices, vehicle-mounted communication devices, aircrafts, airplanes, drones, remote-controlled airplanes and other wireless communication devices. The base station device or base station or network side device in the present application includes, but is not limited to, macrocellular base stations, microcellular base stations, Femtocells, relay base stations, eNBs, gNBs, transmission and reception points (TRPs), relay satellites, satellite base stations, aerial base stations and other wireless communication devices.

Those skilled in the art should understand that the present invention can be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be comprised therein.

**Claims**

1.   A first node device for wireless communication, comprising:

a first transceiver, receiving a first information block, the first information block being used for determining a first cell set, and the first cell set comprising a plurality of cells; and
a first receiver, monitoring a plurality of PDCCH candidates,
wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; and the index value is equal to the first index value and all search space sets for the first cell set comprise an equal number of PDCCH candidates using the first aggregation level.

2.   The first node device according to claim 1, wherein the first transceiver receives M1 information blocks, the M1 information blocks is used for respectively determining index values of M1 search space sets and the number of PDCCH candidates respectively using the first aggregation level in the M1 search space sets, and M1 is a positive integer greater than 1; and any one of the M1 search space sets is a search space set for a cell in the first cell set, and among the M1 search space sets, all search space sets whose index values are equal to the first index value comprise an equal number of PDCCH candidates using the first aggregation level.

3.   The first node device according to claim 1 or 2, wherein the number of PDCCH candidates using the first aggregation level that are comprised in any one search space set whose index value is equal to the first index value and which is for the first cell set is a feature number value, the feature number value is one of M2 number values, and M2 is a positive integer greater than 1; and any one of the M2 number values is the number of PDCCH candidates using the first aggregation level that are comprised in a search space set whose index value is equal to the first index value and which is for at least one cell, and a maximum number value of the M2 number values is used for determining the PDCCH candidates using the first aggregation level from the first search space set.

4.   The first node device according to any one of claims 1 to 3, wherein the first information block is used for determining W1 cell sets and W2 cell sets, any one of the W1 cell sets comprises at least one cell, any one of the W2 cell sets comprises at least one cell, W1 is a positive integer greater than 1, and W2 is a positive integer greater than 1; and the first cell set comprises all cells comprised in any one of the W1 cell sets, and the first cell set comprises all cells comprised in any one of the W2 cell sets.

5.   The first node device according to claim 4, wherein a first number value is equal to a maximum value of the numbers of cells respectively comprised in the W1 cell sets, a second number value is equal to a maximum value of the numbers of cells respectively comprised in the W2 cell sets, the first number value is a positive integer, and the second number value is a positive integer; and the first number value is used for determining a first candidate size, the second number value is used for determining a second candidate size, and the size of the feature DCI format is equal to a larger value between the first candidate size and the second candidate size.

6. The first node device according to any one of claims 1 to 5, wherein the first transceiver sends a second information block, wherein the second information block is used for indicating a capability parameter set of a sender of the second information block, and the capability parameter set of the sender of the second information block comprises at least a first parameter and a second parameter; and the first parameter is used for indicating the number of downlink cells supported by the sender of the second information block that are scheduled simultaneously by one PDCCH, and the second parameter is used for indicating the number of uplink cells supported by the sender of the second information block that are scheduled simultaneously by one PDCCH.

7. The first node device according to any one of claims 1 to 6, wherein the plurality of PDCCH candidates comprise a first PDCCH candidate and a second PDCCH candidate, the first PDCCH candidate is for a first DCI format, the second PDCCH candidate is for a second DCI format, and the size of the first DCI format is equal to the size of the second DCI format; the first DCI format is used for scheduling one cell set; the second DCI format is used for scheduling another cell set; an aggregation level of the first PDCCH candidate is equal to an aggregation level of the second PDCCH candidate, and an index of a control resource set to which the first PDCCH candidate belongs is equal to an index of a control resource set to which the second PDCCH candidate belongs; and the first node device is capable of receiving a PDCCH carrying the first DCI format on the second PDCCH candidate.

8. A second node device for wireless communication, comprising:

a second transceiver, sending a first information block, the first information block being used for determining a first cell set, and the first cell set comprising a plurality of cells; and
a first transmitter, determining a plurality of PDCCH candidates,
wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; and the index value is equal to the first index value and all search space sets for the first cell set comprise an equal number of PDCCH candidates using the first aggregation level.

9. A method for use in a first wireless communication node, comprising:

receiving a first information block, the first information block being used for determining a first cell set, and the first cell set comprising a plurality of cells; and
monitoring a plurality of PDCCH candidates,
wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; and the index value is equal to the first index value and all search space sets for the first cell set comprise an equal number of PDCCH candidates using the first aggregation level.

10. A method for use in a second wireless communication node, comprising:

sending a first information block, the first information block being used for determining a first cell set, and the first cell set comprising a plurality of cells; and
determining a plurality of PDCCH candidates,
wherein the plurality of PDCCH candidates comprise at least one PDCCH candidate belonging to a first search space set, a first index value is equal to an index value of the first search space set, and the first index value is a non-negative integer; a feature DCI format is a DCI format for the first search space set, and the upper limit of the number of cells for which the feature DCI format is used for scheduling is greater than 1; at least one of the plurality of PDCCH candidates uses a first aggregation level, and the first aggregation level is a positive integer; and the index value is equal to the first index value and all search space sets for the first cell set comprise an equal number of PDCCH candidates using the first aggregation level.

```
                  ┌─────────────────────────────────────┐
                  │   Receive a first information block  │──101
100               └─────────────────────────────────────┘
   ↘                              │
                  ┌─────────────────────────────────────┐
                  │   Monitor a plurality of PDCCH candidates │──102
                  └─────────────────────────────────────┘
                              FIG. 1
```

FIG. 1

FIG.2

FIG.3

FIG.4

N500. Second node

U550. First node

S551. Send a second information block

------- Second information block -------

S501. Receive a second information block

S502. Send a first information block

------- First information block -------

S552. Receive a first information block

S503. Send M1 information blocks

------- M1 information blocks -------

S553. Receive M1 information blocks

S504. Determine a plurality of PDCCH candidates

------- PDCCH -------

S554. Monitor a plurality of PDCCH candidates

End

End

FIG.5

1    2    3    4    ......    M1-1    M1

AL=1 AL=2 AL=1 AL=8 AL=16 | AL=1 AL=2 AL=4 AL=8 AL=16 | AL=1 AL=2 AL=1 AL=8 AL=16 | AL=1 AL=2 AL=1 AL=8 AL=16 | ...... | AL=1 AL=2 AL=1 AL=8 AL=16 | AL=1 AL=2 AL=4 AL=8 AL=16

Search space index = s    Search space index = r    Search space index = s    Search space index = s    Search space index = s    Search space index = y

FIG.6

$$M^{(L)}_{s,\max} = \max\left\{M^{(L)}_{s,1}, M^{(L)}_{s,2}, \ldots, M^{(L)}_{s,M2}\right\}$$

FIG.7

FIG.8

Second number value

First number value

FIG.9

First parameter

Downlink

Second parameter

Uplink

FIG.10

First PDCCH candidate    Second PDCCH candidate

First DCI format

FIG.11

1200

First node
device

First transceiver
1201

First receiver
1202

FIG.12

1300

Second node
device

Second transceiver
1301

First transmitter
1302

FIG.13

**INTERNATIONAL SEARCH REPORT**

| International application No. |
| --- |
| **PCT/CN2023/120654** |

| A. | CLASSIFICATION OF SUBJECT MATTER |
| --- | --- |

H04W 72/232(2023.01)i; H04L27/26(2006.01)i

According to International Patent Classification (IPC) or to both national classification and IPC

| B. | FIELDS SEARCHED |
| --- | --- |

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

3GPP, CNTXT, ENTXTC, CNKI: 备选, 候选, 聚合等级, 多载波, 监测, 监视, 控制信道, 数量, 搜索空间, 索引, 小区集合, aggregation level, CrossCarrier Scheduling, search space, Carrier Aggregation, monitor, index

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 113572713 A (SHANGHAI LANGBO COMMUNICATION TECHNOLOGY CO., LTD.) 29 October 2021 (2021-10-29) description, paragraphs 4-713 | 1-5, 8-10 |
| Y | CN 115002786 A (SHANGHAI LANGBO COMMUNICATION TECHNOLOGY CO., LTD.) 02 September 2022 (2022-09-02) description, paragraphs 4-430 | 1-5, 8-10 |
| A | CN 111865536 A (HUAWEI TECHNOLOGIES CO., LTD.) 30 October 2020 (2020-10-30) entire document | 1-10 |
| A | QUALCOMM INC. ""R1-1804798_Remaining issues on control resource set and search space"" *3GPP tsg_ran\WG1_RL1*, 07 April 2018 (2018-04-07), entire document | 1-10 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **17 November 2023** | **24 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120654**

| Patent document cited in search report | | | Publication date (day/month/year) | Patent family member(s) | Publication date (day/month/year) |
|---|---|---|---|---|---|
| CN | 113572713 | A | 29 October 2021 | None | |
| CN | 115002786 | A | 02 September 2022 | None | |
| CN | 111865536 | A | 30 October 2020 | None | |

Form PCT/ISA/210 (patent family annex) (July 2022)